(19) **Europäisches Patentamt / European Patent Office / Office européen des brevets**

(11) **EP 3 720 296 B1**

(12) **EUROPEAN PATENT SPECIFICATION**

(45) Date of publication and mention of the grant of the patent:
**27.10.2021 Bulletin 2021/43**

(21) Application number: **18814592.4**

(22) Date of filing: **05.12.2018**

(51) Int Cl.:
*A23L 29/281* (2016.01)    *A23L 7/109* (2016.01)
*A23L 33/19* (2016.01)    *A23L 33/20* (2016.01)

(86) International application number:
**PCT/EP2018/083664**

(87) International publication number:
**WO 2019/110668 (13.06.2019 Gazette 2019/24)**

(54) **HIGH PROTEIN PASTA**

PROTEINREICHE PASTA

PÂTES ALIMENTAIRES À FORTE TENEUR EN PROTÉINES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.12.2017 EP 17205433**

(43) Date of publication of application:
**14.10.2020 Bulletin 2020/42**

(73) Proprietor: **Arla Foods Amba**
**8260 Viby J (DK)**

(72) Inventors:
- **POVLSEN, Inge Lise**
  **8660 Skanderborg (DK)**
- **LANGVIG, Cecilie Wilsøe**
  **8230 Åbyhøj (DK)**
- **JENSEN, Hanne Bak**
  **8260 Viby J (DK)**

(74) Representative: **Plougmann Vingtoft a/s**
**Strandvejen 70**
**2900 Hellerup (DK)**

(56) References cited:
**WO-A1-2006/058538    US-A- 3 949 101
US-A- 4 361 591    US-A- 4 734 287
US-A1- 2005 208 180    US-A1- 2011 142 984
US-A1- 2017 318 828**

- **D Baskaran ET AL: "Physical properties of noodles enriched with whey protein concentrate (WPC) and skim milk powder (SMP)", Journal of Stored Products and Postharvest Research, 1 January 2011 (2011-01-01), pages 127-130, XP055455714, Retrieved from the Internet: URL:http://www.academicjournals.org/articl e/article1379944491_Baskaran%20et%20al.pdf [retrieved on 2018-03-01]**

EP 3 720 296 B1

## Description

### Technical field of the invention

The present invention relates to a pasta comprising a low carbohydrate and high protein content. In particular, the present invention relates to a pasta comprising an amount of total protein of at least 13% by weight of dry matter content and wherein the pasta comprises microparticulated and denatured whey protein in an amount of at least 5% by weight of the dry matter content of the pasta.

### Background of the invention

Pasta products are common food product all over the world. Pasta is food products with a high amount of wheat flour and thus a high amount of carbohydrates and a low protein content. Cooking time of pasta is important to obtain an aldente bite of the pasta. When pasta is cooked it is often exposed to overcooking, as it is difficult to control cooking time to avoid overcooking, i.e. the pasta often becomes sticky and swelled and is therefore not a pleasant consumer experience.

Proteins has over the past years been shown to have beneficial properties in food product, i.e. food products with high protein content increases satiety for consumers and therefore many diets recommend intake of high protein products.

Increasing the protein content in various food products is consistently investigated and it has also been an attempt to increase the protein content in pasta products, but it has so far not been possible to provide a pasta with a high protein content and at the same time have smooth, non-sticky surface and a pleasant taste.

US 4,361,591 for example discloses a pasta product formed with about 5% of a proteinaceaus additive material consisting essentially of calcium caseinate and partially denatured whey protein in approximately equal portions having an average particle size of less than about 0.005 inch (corresponding to 127 μm).

US2005/208180 discloses a nutrient delivery system, comprising an extruded and ground protein source, e.g. whey protein, having particle size 20-400 microns, for use in food products, without adversely affecting to organoleptic properties of the product.

However, this pasta is sticky and swelled after cooking and therefore of low preference for consumers.

Hence, a pasta with a high content of protein but having good sensory properties such as a smooth, non-sticky and non-swelled surface and a pleasent flavour profile would be advantageous.

### Summary of the invention

The inventors of the present invention have surprisingly shown that addition of microparticulated and denatured whey protein to a pasta dough results in a pasta having improved resistance to overcooking, i.e. stickiness of the cooked pasta is reduced. In addition, the inventors surprisingly have found out that a pasta according to the invention can be obtained with a water content being up to 7% higher than standard conventional pasta products.

One object of the present invention therefore relates to providing a pasta product with a high protein content with good quality, i.e. improved resistance to overcooking and wherein stickiness and swelling due to overcooking is reduced.

In particular, it is an object of the present invention to provide a pasta that solves the above mentioned problems of the prior art with regard to impaired texture of pasta after cooking.

Thus, one aspect of the invention relates to a pasta comprising a total amount of protein of at least 13% by weight of dry matter content and wherein the pasta comprises microparticulated and denatured whey protein in an amount of at least 5% by weight of the dry matter content of the pasta.

### Brief description of the figures

Figure 1 a) to h) shows pictures of different samples of pasta dough.

Figure 2 a) to c) shows pictures of different samples of uncooked pasta bands.

Figure 3 shows the hardness of different samples of cooked pasta after various times of cooking.

Figures 4 a) and b) show swelling of different samples of cooked pasta after 1 minute and 10 minutes of cooking.

Figures 5 a) to g) show pictures of pasta dough with different amounts of water added.

Figures 6 a) to g) show pictures of uncooked pastabands with different amounts of water added.

Figure 7 shows hardness of cooked pasta having different amounts of water added and cooked at different times.

Figures 8 a) to e) show pictures of cooked pastabands with different amounts of water added.

Figures 9 a) and b) show sensoric evaluations of pasta with microparticulated and denatured whey protein added as compared to added soy protein and no added protein (reference).

Figures 10 a) and b) show the stickiness of different types of pasta and at different cooking time.

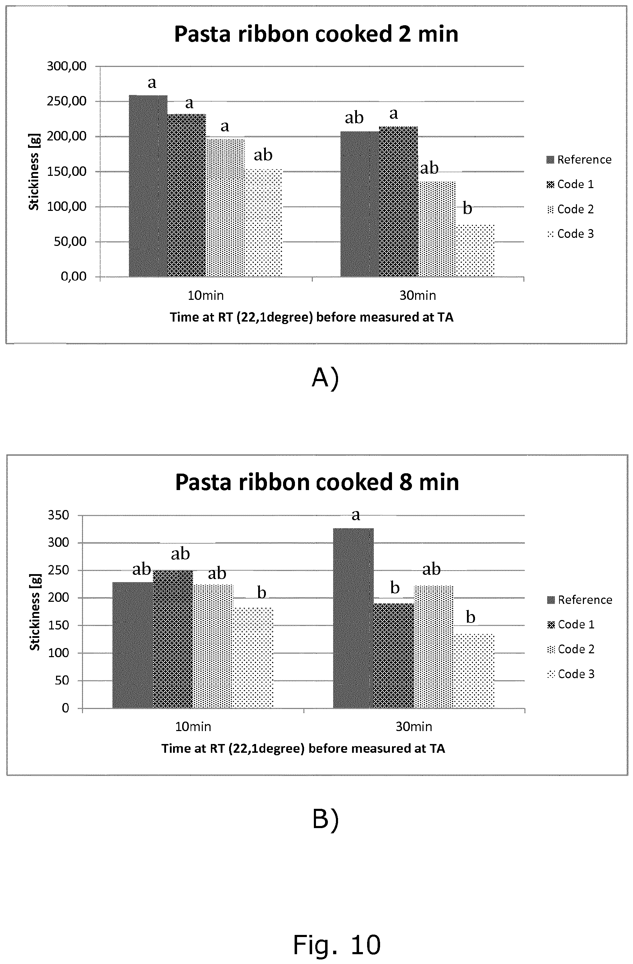

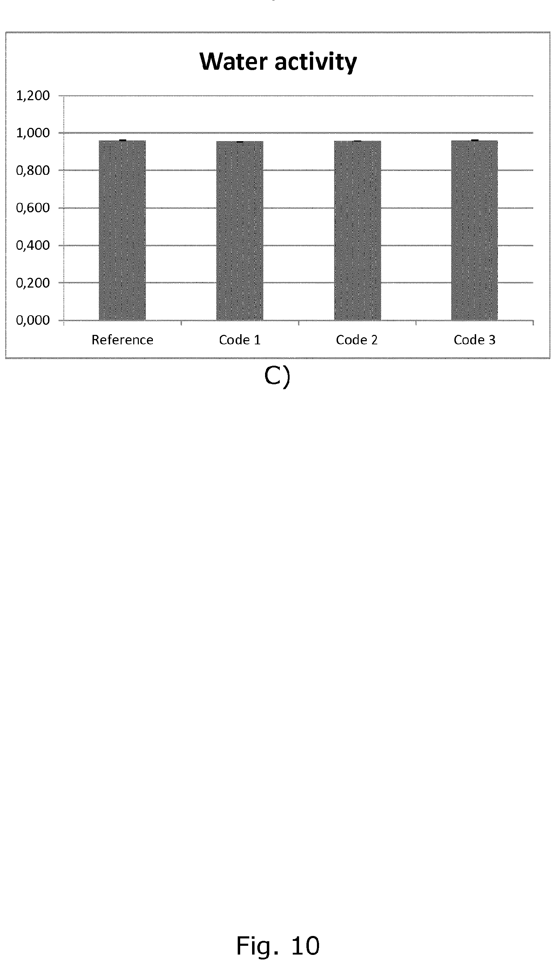

Figure 10 c) shows water activity of different types of pasta.

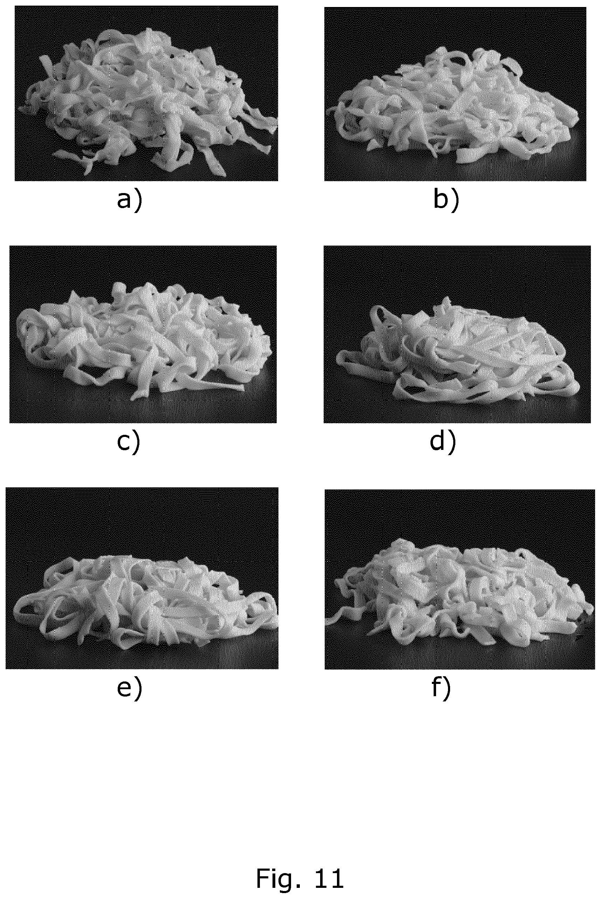

Figures 11 a) to f) show pictures of cooked pastabands with different amounts of microparticulated and denatured whey protein added.

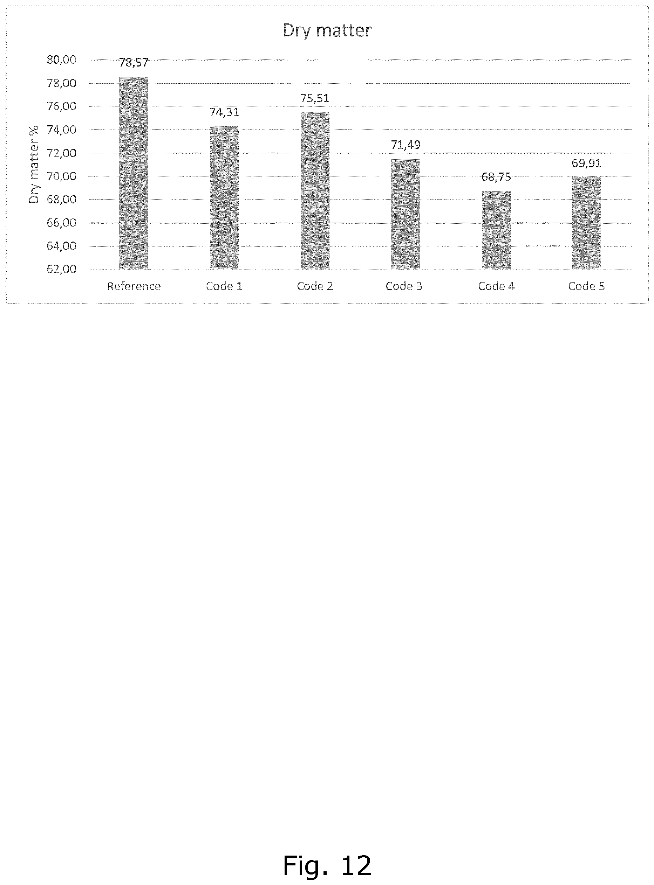

Figure 12 shows the dry matter content of cooked pastabands with different amounts of microparticulated and denatured whey protein added.

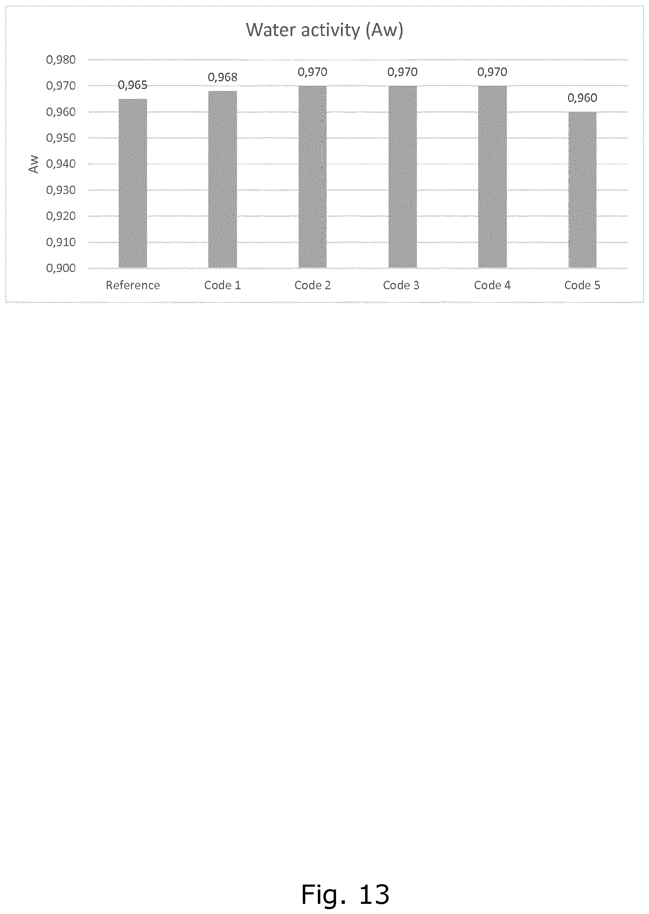

Figure 13 shows the water activity of cooked pastabands with different amounts of microparticulated and denatured whey protein added.

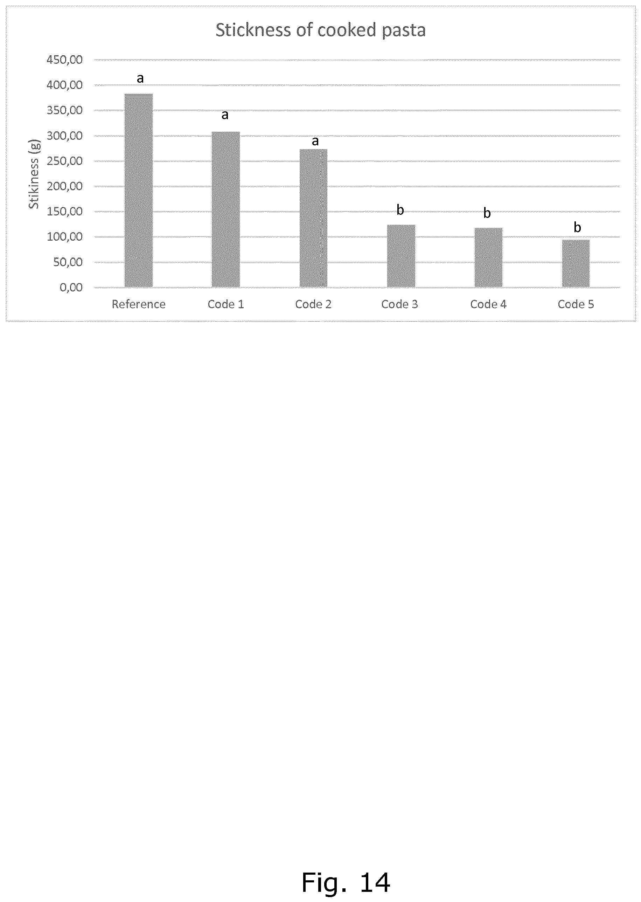

Figure 14 shows stickiness of cooked pastabands with different amounts of microparticulated and denatured whey protein added.

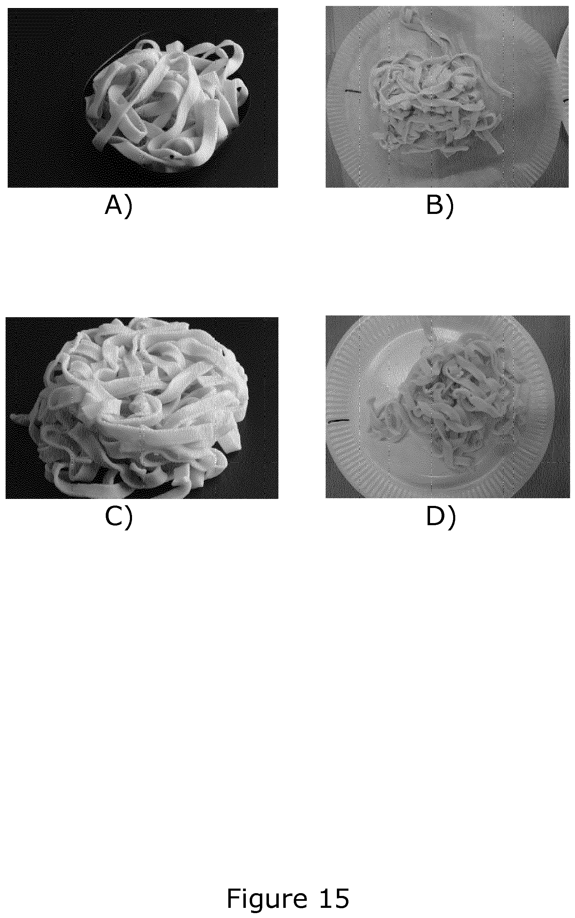

Figures 15 A) to D) show pictures of uncooked and cooked pasta bands with either microparticulated and denatured whey protein added or caseinate added.

The present invention will now be described in more detail in the following.

**Detailed description of the invention**

Definitions

Prior to discussing the present invention in further details, the following terms and conventions will first be defined: All references to singular characteristics or limitations of the present invention shall include the corresponding plural characteristic or limitation, and vice versa, unless otherwise specified or clearly implied to the contrary by the context in which the reference is made.
All percentages referred to herein is percentages by weight unless otherwise stated. Also, the terms "by weight of dry matter" and "on dry matter basis" refer to the same concept and are used interchangeably.
Unless defined otherwise, all technical and scientific terms used herein have the same meaning as commonly understood by one of ordinary skill in the art.

Pasta:

The term pasta as used herein refers to a food product made from an unleavened dough of a flour mixed with salt, egg or water and formed into sheets or various other shapes, then cooked and served in any number of dishes. The pasta is preferably made with wheat flour and more preferably with durum wheat flour. However, pasta can be made with flour from other cereals or grains, and water might be used as replacement or partly replacement of egg. Pastas may be divided into two broad categories, dried pasta and fresh pasta. Typically pasta is made from durum wheat flour. Durum wheat flour has a high gluten content. The term "pasta" as used herein includes noodles.
The pasta according to the present invention may be both dried pasta and fresh pasta, but in an embodiment of the invention, the pasta is fresh pasta.
In the context of the present invention, the term "fresh pasta" relates to a pasta which has not been subjected to a drying process. A fresh pasta refers to a pasta made of a fresh dough having a moisture content of at least 15% by weight, such as from 15% to 40% moisture by weight. By moisture is meant liquid, such as water. Normally, the moisture content of a fresh pasta will be in the range of 20-30% by weight of the pasta.

The term "flour" as used herein refers to a foodstuff which is a free-flowing powder, typically obtained by milling of grains.

Typically, the flour in a pasta according to the invention is wheat flour, such as durum wheat flour, but flour from other cereals may be used, for example in combination with wheat flour. Examples of flour include wheat, triticale, rye, barley, oat, buckwheat, spelt, millet, quinoa, corn, rice, potato, almond, hazelnut, and coconut flour.

In wheat flour, the protein content is typically 8-15% depending on flour quality.

In an aspect of the invention, the pasta comprises at least 13% protein (total protein) by weight of the dry matter content of the pasta. The protein in the pasta comes from the flour used to prepare the pasta and the added microparticulated and denatured whey protein.

The term "total protein" as used herein relates to the total amount of protein of the pasta product, i.e. relates to true protein of the pasta and disregarding non-protein nitrogen (NPN). In the pasta of the invention, the total protein content includes protein from 1) microparticulated and denatured whey protein and 2) protein from the flour used for the preparation of the pasta and 3) protein from egg white powder, 4) possible other protein sources added.

In a further embodiment of the invention, the pasta comprises at least 15% total protein by weight of the dry matter content of the pasta, such as at least 18% total protein by weight of the dry matter content of the pasta, even more preferably at least 20% total protein of the dry matter content of the pasta.

In an even further embodiment of the invention, the pasta comprises a total protein content in the range of 13-30% by weight of the dry matter content of the pasta, such as from 18-27%.

Whey protein:

In an aspect of the present invention, the pasta comprises microparticulated and denatured whey protein. Whey protein is a mixture of globular proteins isolated from whey, the liquid material created as a by-product of cheese production. Whey proteins are proteins present in the serum phase of either milk or coagulated milk. The proteins of the serum phase of milk are besides from whey proteins also sometimes referred to as milk serum proteins.

Whey as such comprises about 10-15% by weight protein. Further, whey as such comprises about 75-85% protein by weight of the dry matter content, such as 78-82% protein of the dry matter content. Besides from protein, whey comprises lactose, i.e. about 9% by weight of the dry matter content. Whey proteins include beta-lactoglobulin (about 55-65%), alpha-lactalbumin (about 18-25%), bovine serum albumin and immunoglobulins.

The whey protein can be derived from different sources of whey, i.e. a whey protein composition, and said whey protein composition may for example be casein whey or sweet whey. Besides from the proteins beta-lactoglobulin and alpha-lactalbumin, sweet whey also comprises caseinomacropeptide (CMP). CMP is not present in casein whey. In a preferred embodiment of the invention, the whey protein added to the pasta dough is from sweet whey.

The term "sweet whey" as used herein refers to the liquid remaining after milk has been curdled and strained during the making of rennet type cheeses. "Sweet whey" is obtained during the production of rennet type hard cheese like Cheddar or Swiss cheese. The pH value of sweet whey can range between 5.2 and 6.7.

The term "casein whey" (may also sometimes be called sour whey or acid whey) relates to whey, which is obtained from casein/caseinate production. In the context of the present invention, the casein whey is not the same as acid whey. The term acid whey is used for the whey obtained during the production of acid type cheeses such as cottage cheese and quark. The pH value of acid whey can range between 3.8 and 4.6. In an embodiment of the invention, the whey protein used is not acid whey. The use of acid whey will cause swelling and gelling of the pasta product and thus provide too much structure and functionality.

In an embodiment of the present invention, the microparticulated and denatured whey protein is derived from denaturation and microparticulation of whey protein from sweet whey comprising a combination of alpha-lactalbumin, beta-lactoglobulin and CMP. The whey protein according to the present invention is not an essentially pure CMP product. For example, the amount of CMP in the microparticulated and denatured whey protein is below 20% by weight of the total amount of protein, preferably below 15% by weight.

The whey protein used in the present invention may be a whey protein concentrate (WPC) or a whey protein isolate (WPI), which has been denatured and microparticulated. The difference between a whey protein concentrate and a whey protein isolate is the composition of the product, particularly the protein content. Whey isolates are more pure than concentrates and other non-protein components have been partially removed to "isolate" the whey protein. Thus, a whey protein isolate contains a higher percentage of protein and can be pure enough to be virtually lactose free, carbohydrate free, fat free, and cholesterol free.

In the present context, the expression "whey Protein Concentrate (WPC)" relates to the dry portion of liquid whey obtained by the removal of sufficient non-protein constituents from whey so that the dry product contains not less than 25% by weight whey protein. However, a whey protein concentrate may comprise higher amounts of whey protein, for example 80% by weight whey protein based on the dry matter content.

A whey protein isolate are generally considered almost free of lactose and cholesterol and has a whey protein content of at least 90% by weight based on dry mater. A whey protein isolate may for example comprise 92% by weight whey protein or higher.

In an embodiment of the invention, the microparticulated and denatured whey protein is a microparticulated and denatured whey protein concentrate from sweet whey.

In a preferred embodiment of the invention, the microparticulated and denatured whey protein composition used in the preparation of the pasta according to the invention comprises a total amount of whey protein of at least 60% by weight on a dry weight basis, preferably at least 70% by weight on a dry weight basis, even more preferably at least 75% by weight on a dry weight basis.

In another embodiment of the invention, the microparticulated and denatured whey protein composition used in the preparation of the pasta according to the invention comprises a total amount of whey protein in the range of 60-95% by weight of dry matter, such as 70-90% by weight, preferably 72-87% by weight, even more preferably in the range of 75-86% by weight of dry matter.

The whey proteins used in the present invention are preferably whey proteins from mammalian milk, such as e.g. milk from cow, sheep, goat, buffalo, camel, llama, horse and/or deer. In some preferred embodiments of the invention, the whey proteins are bovine whey proteins.

In the context of the present invention, the term "whey" relates to the liquid composition which is left when casein has been removed from milk. Casein may e.g. be removed by microfiltration providing a liquid permeate which is free or essential free of micellar casein but contains the native whey proteins. This liquid permeate is sometimes referred to as ideal whey, serum or milk serum.

In a preferred embodiment of the present invention, the pasta comprises essentially no casein and/or caseinate, i.e. the pasta is essentially free of casein and/or caseinate. If casein and/or caseinate is present in the pasta, it is in very low amounts, such as maximum 5 % by weight of the total protein content in the pasta. Preferably, casein and/or caseinate is present in the pasta in amount of less than 3% by weight of the total protein content, even more preferably in an amount of less than 2% by weight, such as less than 1% by weight of the total protein content of the pasta. Even though casein is a dairy proteins as whey protein, casein does not have the good properties as microparticulated and denatured whey proteins in the preparation of a pasta. Thus, denatured and microparticulated whey protein should not be added as a whey protein:casein complex. Without being bound by any theory, the inventors of the present invention have found that the presence of casein in pasta dough makes the pasta swelling and gelatinize during cooking. In further embodiments of the present invention, the denatured and microparticulated whey protein used for preparing the pasta comprises essentially no casein and/or caseinate, such as 2% by weight or lower casein and/or caseinate of the total protein content in the denatured and microparticulated whey protein, preferably 1% by weight or lower, even more preferably free of casein and/or caseinate.

Besides from casein being removed by microfiltration, casein can also be removed from milk by modify milk composition with rennet enzyme, which cleavages kappa-casein into para-kappa-casein and the peptide caseinomacropeptide (CMP), thereby destabilizing the casein micelles and causing casein to precipitate. The liquid surrounding the rennet precipitated casein is often referred to as sweet whey and contains CMP in addition to the whey protein which are normally found in milk.

Casein may also be removed from milk by acid precipitation, i.e. reducing the pH of the milk below pH 4.6 which is the isoelectric point of casein and which causes the casein micelles to disintegrate and precipitate. The liquid surrounding the acid precipitated casein is often referred to as acid whey or casein whey and does not contain CMP.

Microparticulated and denatured whey protein:

The pasta of the invention comprises microparticulated and denatured whey protein. Denaturation and microparticulation is different from each other, and where a whey protein can be denatured without being microparticulated, a microparticulated whey protein will always be denatured.

In the context of the present invention, the term "microparticulated whey protein" refers to a whey protein composition, e.g. whey protein concentrate, which has been subjected to a microparticulation process such that the protein aggregates. Microparticulation is a thermal or mechanical treatment which creates aggregates of proteins. For example microparticulation is made by high heat treatment combined with controlled shear force.

In the context of the present invention, the term "denatured whey protein" relates to a composition which comprises at least some denatured whey protein and preferably a significant amount of denatured whey protein. The composition may also contain some non-denatured whey proteins, however, the protein of the denatured whey protein composition preferably has a degree of denaturation of at least 50%. For example, the protein may have a degree of denaturation of at least 60%. The protein of denatured whey protein composition may e.g. have degree of denaturation of at least 70% such as at least 75%. Alternatively, the protein of denatured whey protein composition may have a degree of denaturation of at least 80%.

Even higher degrees of denaturation may be desirable, thus, the protein of denatured whey protein composition may have a degree of denaturation of at least 85%. For example, the protein of the denatured whey protein composition may have a degree of denaturation of at least 90%. The protein of the denatured whey protein composition may e.g. have a degree of denaturation of at least 95%, such as at least 97%. Alternatively, the protein of denatured whey protein composition may have a degree of denaturation of at least 99%.

The degree of denaturation is determined according to the procedure outlined in Example 1.7.

Denaturation of whey protein is different from microparticulation. Denaturation and microparticulation results from a complex mechanism dominated by the denaturation of the protein which has been explained by Simmons et al., (2007) and Schokker et al. (2000), by a two-step process. The denaturation step is endothermic; which consists of protein unfolding and changes in the equilibrium between protein dimers and native and non-native monomers, associated with reversible or irreversible intramolecular rearrangements (e.g. disruption of hydrogen bonds).

The microparticulation step corresponds to aggregation, and results mainly from an intermolecular -SH to S-S exchange and, to a lesser extent, from noncovalent interactions. Aggregation starts with the formation of non-native dimers and oligomers which rapidly grow as a function of chemical environment and temperature, mainly by incorporation of monomers and smaller aggregates. Microparticulation and denaturation of whey protein as used in the present invention is disclosed in Example 2.

Microparticulated whey protein (MWP) is manufactured from whey protein concentrate in a process that primarily involves simultaneous heating and shearing (see EP 0 250 623) at an appropriate pH. The shear may be provided by mechanical shearing, using e.g. scraped-surface heat exchangers or homogenizers, or by subjecting the solution to high linear flow rates which promote turbulence. Alternative processes may be utilized instead, such as extrusion cooking at acid pH (Queguiner, Dumay, Saloucavalier, & Cheftel, 1992) or dynamic high pressure shearing, i.e., microfluidization (Dissanayake & Vasiljevic, 2009). The result is whey protein aggregates with a particle size volume distribution where the particle sizes usually range between 0.5 and 10 $\mu$m (Spiegel & Huss, 2002).

The denatured and microparticulated whey protein to be used in the pasta according to the present invention, may for example be prepared by a method comprising the following steps:

a) Providing a solution comprising whey protein, said solution having a pH in the range of 5-8, said solution comprising:

- water,
- a total amount of protein of at least 60% (w/w) on a dry weight basis,

b) Heating said solution to a temperature in the range of 70-160 degreese C and keeping the temperature of the solution within this range for sufficient time to form insoluble whey protein microparticles having a particle size in the range of 0.5-10 microns

c) Optionally, cooling the heat-treated solution,

d) Optionally, converting the heat-treated solution to a powder,

e) Wherein at least step b) involves subjecting the solution to mechanical shear.

The microparticulated whey proteins according to the present invention will therefore have a particle size distribution with a particle size from 0.5 to 10 micrometer ($\mu$m).

The pasta of the invention comprises microparticulated and denatured whey protein in an amount of at least 5% by weight of the dry matter content of the pasta. In a preferred embodiment of the invention, the pasta comprises at least 7% microparticulated and denatured whey protein by weight of dry matter, such as at least 12% microparticulated and denatured whey protein by weight of dry matter, and even more preferably at least 15% by weight of the dry matter content of the pasta.

In another embodiment of the invention, the pasta of the invention comprises microparticulated and denatured whey protein in an amount of from 5 to 25% by weight of the dry matter content of the pasta. In a preferred embodiment of the invention, the pasta comprises microparticulated and denatured whey protein in an amount of from 8 to 20% by weight of the dry matter content of the pasta, such as from 10 to 18%, and even more preferably the pasta comprises microparticulated and denatured whey protein in an amount of from 11 to 15% by weight of the dry matter content of the pasta.

In another embodiment of the invention, the pasta comprises at least 3% microparticulated and denatured whey protein by weight of the pasta as such, such as at least 6% microparticulated and denatured whey protein by weight of the pasta as such, even more preferably at least 11% microparticulated and denatured whey protein by weight of the pasta as such. By the term "pasta as such" is meant all the ingredients of making up the pasta including dry ingredients and water and other liquids.

In an embodiment of the invention, the pasta of the invention comprises microparticulated and denatured whey protein in a range of from 3% to 20% by weight of the pasta as such, such as at least 5-18% microparticulated and denatured whey protein by weight of the pasta as such, even more preferably at least 7-15% microparticulated and denatured whey protein by weight of the pasta as such.

In a further embodiment of the invention, the pasta of the invention comprises microparticulated and denatured whey protein in an amount of at least 35% by weight of the total protein content in the pasta, preferably at least 40% by weight of the total protein content in the pasta, such as at least 45%, most preferably at least 50% by weight of the total protein content in the pasta.

In an embodiment of the invention, the pasta of the invention comprises microparticulated and denatured whey protein in an amount of from 35% to 60% by weight of the total protein content in the pasta, preferably from 40% to 55% by weight of the total protein content in the pasta, even more preferably from 42% to 52% by weight of the total protein content in the pasta.

The microparticulated and denatured whey proteins according to the present invention may also be referred to as "insoluble whey protein particles" and pertains to particulate aggregates comprising microparticulated and denatured whey proteins, which aggregate can be separated from soluble whey proteins by centrifugation.

Insoluble whey protein particles having a particle size in the range of 0.5-10 micrometer (micron) are of particular interest for the present invention, and in some preferred embodiments the microparticulated and denatured whey protein composition comprises insoluble whey protein particles in this size range in an amount of at least 50% (w/w) relative to the total amount of protein of the composition, such as at least 55% w/w relative to the total amount of protein.

A large particle size of the denatured and microparticulated whey protein will have an impaired impact on dough rheology and dough consistence.

During development of the dough, the gluten network will be influenced by the large particles and less gluten strength will be obtained, resulting in a more fragile network, i.e the dough will be less extensible."

The amount (% w/w relative to the total amount of protein) of insoluble whey protein particles having a particle size in the range of 0.5-10 micrometer in a microparticulated and denatured whey protein composition is determined according to Example 1.8 (P1-$_{10}$)

For example, the microparticulated and denatured whey protein composition may comprise insoluble whey protein particles having a particle size in the range of 0.5-10 microns ($\mu$m) in an amount of at least 60% (w/w) relative to the total amount of protein of the composition. The particle size range 0.5-10 micron effectively covers particles having a particle size (hydrodynamic diameter) as low as 0.5000 micron and as high as 10.4999 micron. The term "w/w" refers to percentage by weight.

The microparticulated and denatured whey protein composition may e.g. comprise insoluble whey protein particles having a particle size in the range of 0.5-10 micron in an amount of at least 65% (w/w) relative to the total amount of protein of the composition. Alternatively, the denatured whey protein composition may comprise insoluble whey protein particles having a particle size in the range of 1-10 micron in an amount of at least 70% (w/w) relative to the total amount of protein of the composition. The microparticulated and denatured whey protein composition may for example comprise insoluble whey protein particles having a particle size in the range of 0.5-10 micron, in an amount of at least 75% (w/w) relative to the total amount of protein of the composition, such as in an amount of at least 80% (w/w).

A higher content of insoluble whey protein particles having a particle size in the range of 0.5-10 micron may be preferred for some applications. Thus, the microparticulated and denatured whey protein composition may comprise insoluble whey protein particles having a particle size in the range of 0.5-10 micron in an amount of at least 85% (w/w) relative to the total amount of protein of the composition. The microparticulated and denatured whey protein composition may e.g. comprise insoluble whey protein particles having a particle size in the range of 0.5-10 micron in an amount of at least 88% (w/w) relative to the total amount of protein of the composition. Alternatively, the microparticulated and denatured whey protein composition may comprise insoluble whey protein particles having a particle size in the range of 0.5-10 micron in an amount of at least 90% (w/w) relative to the total amount of protein of the composition, such as in an amount of at least 95% (w/w) or approx. 100% (w/w).

In some embodiments of the invention, the denatured whey protein composition may comprise insoluble whey protein particles having a particle size in the range of 0.5-10 micron in an amount of 50-100% (w/w) relative to the total amount of protein of the composition. The denatured whey protein composition may e.g. comprise insoluble whey protein particles having a particles size in the range of 0.5-10 micron in an amount in the range of 60-95% (w/w) relative to the total amount of protein of the composition. Alternatively, the denatured whey protein composition may comprise insoluble whey proein particles having a particle size in the range of 0.5-10 micron in an amount in the range of 65-90% (w/w) relative to the total amount of protein of the composition. The denatured whey protein composition may for example comprise insoluble whey protein particles having a particle size in the range of 0.5-10 micron in an amount in the range of 70-85% (w/w) relative to the total amount of protein of the composition.

Insoluble whey protein particles having a particle size of approx. 1 micron are of particular interest for the present invention, and in some preferred embodiments the microparticulated and denatured whey protein composition comprises insoluble whey protein particles within this range in an amount of at least 50% (w/w) relative to the total amount of protein of the composition. The term "particle size of approx. 1 micron" covers particles having a particle size (hydrodynamic diameter) as low as 0.5000 micron and as high as 1.4999 micron, i.e. from 0.5 to 1.5 micron. The amount (% w/w relative to the total amount of protein) of insoluble whey protein particles having a particle size in the range of approx. 1 micron in a denatured and microparticulated whey protein composition is determined according to Example 1.8.

In one embodiment of the present invention, at least 55% of the microparticulated and denatured whey protein composition has a particle size distribution within the range of 0.5-1.5 micron, such as at least 60%, e.g. at least 70% of the microparticulated and denatured whey protein composition has a particle size distribution within the range of 0.5-1.5 micron, preferably at least 75% of the microparticulated and denatured whey protein material has a particle size distribution within the range of 0.5-1.5 micron.

A higher content of insoluble whey protein particles having a particle size of 0.5-1.5 micron may be preferred for some applications. Thus, the denatured and microparticulated whey protein composition may comprise insoluble whey protein particles having a particle size of 0.5-1.5 micron in an amount of at least 80% (w/w) relative to the total amount of protein of the composition. The denatured and microparticulated whey protein composition may e.g. comprise insoluble whey protein particles having a particle size of 0.5-1.5 micron in an amount of at least 85% (w/w) relative to the total amount of protein of the composition. Alternatively, the denatured and microparticulated whey protein composition may comprise insoluble whey protein particles of 0.5-1.5 micron in an amount of at least 90% (w/w) relative to the total amount of protein of the composition, such as in an amount of at least 95% (w/w) or approx. 100% (w/w).

In some embodiments of the invention, the denatured and microparticulated whey protein composition may comprise insoluble whey protein particles having a particle size of 0.5-1.5 micron in an amount in the range of 50-100% (w/w) relative to the total amount of protein of the composition. The microparticlated and denatured whey protein composition may e.g. comprise insoluble whey protein particles having a particle size of 0.5-1.5 micron in an amount in the range of 60-95% (w/w) relative to the total amount of protein of the composition. Alternatively, the denatured whey protein composition may comprise insoluble whey protein particles having a particle size of 0.5-1.5 in an amount in the range of 65-90% (w/w) relative to the total amount of protein of the composition. The denatured whey protein composition may for example comprise insoluble whey protein particles having a particle size of 0.5-1.5 micron in an amount in the range of 70-85% (w/w) relative to the total amount of protein of the composition.

In some embodiments of the invention, the denatured and microparticulated whey protein comprises insoluble whey protein particles having a particle size of more than 10 micron in an amount of at most 10% (w/w) relative to the total amount of protein of the composition, preferably at most 5% (w/w), and even more preferably at most 1% (w/w).

Additionally, it is sometimes preferred that the amount of insoluble whey protein particles have a size below 0.5 micron is kept to a minimum as these may provide an undesirable swelling of the pasta.

Thus, in some embodiments of the invention, the microparticulated and denatured whey protein composition comprises insoluble protein particles having a particle size of less than 0.5 micron in an amount of at most 10% (w/w) relative to the total amount of protein of the composition, preferably at most 5% (w/w), and even more preferably at most 1% (w/w).

In some preferred embodiments of the invention, the denatured and microparticulated whey protein composition comprises:

- insoluble whey protein particles having a particle size in the range of 0.5-10 micron in an amount of at least 50% (w/w) relative to the total amount of protein of the composition,
- insoluble whey protein particles having a particle size of more than 10 micron in an amount of at most 10% (w/w) relative to the total amount of protein of the composition, and
- insoluble whey protein particles having a particle size of less than 0.5 micron in an amount of at most 10% (w/w) relative to the total amount of protein of the composition.

For example, the denatured and microparticulated whey protein composition comprises:

- insoluble whey protein particles having a particle size in the range of 0.5-10 micron in an amount of at least 50% (w/w) relative to the total amount of protein of the composition,
- insoluble whey protein particles having a particle size of more than 10 micron in an amount of at most 5% (w/w) relative to the total amount of protein of the composition, and
- insoluble whey protein particles having a particle size of less than 0.5 micron in an amount of at most 10% (w/w) relative to the total amount of protein of the composition.

Alternatively, the denatured and microparticulated whey protein composition comprises:

- insoluble whey protein particles having a particle size in the range of 0.5-10 micron in an amount of at least 50% (w/w) relative to the total amount of protein of the composition,
- insoluble whey protein particles having a particle size of more than 10 micron in an amount of at most 1% (w/w) relative to the total amount of protein of the composition, and

- insoluble whey protein particles having a particle size of less than 0.5 micron in an amount of at most 10% (w/w) relative to the total amount of protein of the composition.

The particle size distribution of the insoluble whey protein particles is using the procedure outlined in Example 1.8.

In a further preferred embodiment, at least 55% of the microparticulated and denatured whey protein composition has a particle size distribution in the range of from 0.7 to 1.0 micron, such as at least 60% of the microparticulated and denatured whey protein composition has a particle size distribution in the range of from 0.7 to 1.0 micron, preferably at least 65% of the microparticulated whey protein material has a particle size distribution within the range of 0.7-1.0 micron.

The particle size of the whey proteins refers to hydrodynamic diameter, and may be determined by methods according to Example 1.8, or by methods known in the art.

In an embodiment of the invention, at least 50% of the whey protein present in the pasta of the invention is denatured and microparticulated, preferably at least 55% of the whey protein present in the pasta of the invention is microparticulated and denatured, even more preferably at least 60% of the whey protein present in the pasta of the invention is denatured and microparticulated, most preferred is that at least 65% of the whey protein present in the pasta of the invention is denatured and microparticulated. In a further embodiment of the invention, 50-100% of the whey protein present in the pasta of the invention is denatured and microparticulated, such as from 55-95% of the whey protein present in the pasta of the invention is denatured and microparticulated, preferably 60-90% of the whey protein present in the pasta of the invention is denatured and microparticulated, even more preferably 65-80% of the whey protein present in the pasta of the invention is denatured and microparticulated.

A whey protein composition such as a WPC or WPI which has been subjected to denaturation and microparticulation will have a lower amount of native alpha-lactalbumin and beta-lactoglobulin since those proteins are denatured. However, the CMP in the WPI and WPC is not denatured and is therefore still present in its native form. The reason for CMP not denaturing during a denaturation step is that CMP does not have any disulphide bonds (SH-groups) and therefore does not denature during heat treatment.

In an embodiment of the present invention, the microparticulated and denatured whey protein material has a denaturation degree within the range of 50-100%. In a preferred embodiment of the invention, the microparticulated and denatured whey protein material has a denaturation degree within the range of 60-98%.

In a microparticulated and denatured whey protein fraction according to the invention, the content of native beta-lactoglobulin and alpha-lactalbumin is reduced as compared to the same whey protein fraction which has not been microparticulated and denatured. On the contrary, the content of CMP is unchanged after microparticulation and denaturation.

Thus, in some preferred embodiments of the invention, the total amount of native soluble alpha-lactalbumin of the microparticulated and denatured whey protein composition is at most 5% (w/w) relative to the total amount of protein. Preferably, the total amount of native soluble alpha-lactalbumin of the denatured and microparticulated whey protein composition is at most 4% (w/w) relative to the total amount of protein, preferably at most 3% (w/w). Even more preferably, the total amount of native soluble alpha-lactalbumin of the denatured and microparticulated whey protein composition is at most 2% (w/w).

The denatured and microparticulated whey proteins are typically present in the form of insoluble whey protein particles. The denatured and microparticulated whey protein composition may also contain minor amounts of soluble whey proteins which have not been denatured during the heat treatment. The denatured whey protein composition may for example comprise native soluble beta-lactoglobulin and/or native soluble alpha-lactalbumin. The denatured whey protein composition furthermore contains CMP, e.g. if the whey protein has been derived from sweet whey.

In the context of the present invention, the term "insoluble whey protein particles" pertains to particulate aggregates comprising denatured whey proteins, which aggregates can be separated from soluble whey protein, for example by centrifugation.

In a preferred embodiment of the invention, the whey protein used in the pasta according to the present invention is microparticulated and denatured whey protein particles having a particle size in the range of 0.5 to 10 micron and a degree of denaturation from 50-100%.

In preferred embodiment of the invention, the microparticulated and denatured whey protein composition according to the invention contains:

- a total amount of protein of at least 60% (w/w) on a dry weight basis, and
- insoluble whey protein particles having a particle size in the range of 0.5-10 micron,

where the amount of said insoluble whey protein particles is in the range of 50-100% (w/w) relative to the total amount of protein in the microparticulated and denatured whey protein composition.

In another preferred embodiment of the invention, the microparticulated and denatured whey protein composition according to the invention contains:

- a total amount of protein of at least 60% (w/w) on a dry weight basis, and
- insoluble whey protein particles having a particle size in the range of 0.5-10 micron,
- the degree of denaturation is from from 50-100%.

where the amount of said insoluble whey protein particles is in the range of 50-100% (w/w) relative to the total amount of protein in the microparticulated and denatured whey protein composition.

The denatured and microparticulated whey protein composition may furthermore comprise salts and minerals, which typically are present in whey or milk derived products. The mineral content of food products are typically represented as the ash content of the food product.

The ash content is a measure of the total amount of minerals present within a food. Ash is the inorganic residue remaining after the water and organic matter have been removed by heating in the presence of oxidizing agents, and it should be noted that the product to which the ash content relates does not contain the ash particles as such. The ash content is preferably determined by the technique of dry ashing.

The inventors of the present invention have found it advantageous to use a microparticulated and denatured whey protein composition with a reduced ash content. In some embodiments of the invention, the denatured whey protein composition has a total protein:ash weight ratio of at least 15. Preferably, the total protein:ash weight ratio of the denatured and microparticulated whey protein composition is at least 20.

For example, the denatured and microparticulated whey protein composition may have a total protein:ash weight ratio in the range of 15-60. The denatured and microparticulated whey protein composition may e.g. have a total protein:ash weight ratio in the range of 20-55. Alternatively, the denatured whey protein composition may have a total protein:ash weight ratio in the range of 25-50, such as in the range of 30-45.

The ash content is determined according to Example 1.4 and the total protein content is determined according to Example 1.1.

In addition to salts and minerals, the denatured and microparticulated whey protein composition furthermore typically comprises fat, e.g. milk fat or whey fat. For example, the denatured and microparticulated whey protein composition may furthermore comprises fat in an amount of at most 8% (w/w) on a dry weight basis.

The denatured and microparticulated whey protein composition may furthermore comprise carbohydrate, typically in the form of lactose or lactose-based oligosaccharides. For example, the microparticulated and denatured whey protein composition may comprise lactose in an amount of at most 30% (w/w) on a dry weight basis. The microparticulated and denatured whey protein composition may e.g. comprise lactose in an amount of at most 15% (w/w) on a dry weight basis. Alternatively, the microparticulated and denatured whey protein composition may comprise lactose in an amount of at most 10% (w/w) on a dry weight basis.

In some preferred embodiments of the invention, the lactose content of the denatured and microparticulated whey protein composition is even lower, such as at most 4% (w/w) on a dry weigh basis. Preferably, the lactose content of the denatured and microparticulated whey protein compostion is at most 3% (w/w) on a dry weight basis. Even more preferably, the lactose content of the denatured and microparticulated whey protein composition is at most 2% (w/w) on a dry weight basis, such as at most 1% (w/w).

The inventors of the present invention have found out that a denatured and microparticulated whey protein composition is advantageous in the preparation of pasta, since it provides a pasta with a non-sticky and non-swelling texture and where an increased amount of water can be included in the pasta as compared to conventional pasta products.

The denatured and microparticulated whey protein composition may be added to the pasta dough as a powder, preferably a dry powder. In the context of the present invention, a dry powder contains at most 6% (w/w) water.

Alternatively, the denatured and microparticulated whey protein composition may be added to the pasta as a suspension and preferably an aqueous suspension, meaning that the insoluble particles of the denatured and microparticulated whey protein composition are suspended in water. In the context of the present invention, an aqueous suspension contains at least 50% (w/w) water, preferably at least 60% /w/w) water, such as at least 70% (w/w).

The pH of a suspension of denatured and microparticulated whey protein composition typically ranges from 6.4-7.0 when measured by dispersing 10 g of denatured whey protein composition in 90 g water at 25°C.

Water content in the pasta:

In the pasta of the present invention, it is possible to have a higher water content as compared to a standard pasta. This is due to the microparticulated whey protein which will be able to absorp and bind more water.

In an embodiment of the invention, the water content in the fresh pasta is in the range of from 20 to 40% by weight, such as from 20 to 35% by weight.

Emulsifier:

In a preferred embodiment of the invention, the pasta comprises essential no emulsifier. By the term "essential no emulsifier" is meant that the amount of emulsifier is below 1% by weight of the dry matter content of the pasta, such as below 0.5%. Preferably, the pasta of the invention is free of emulsifier.

It should be noted that embodiments and features described in the context of one of the aspects of the present invention also apply to the other aspects of the invention.

The invention will now be described in further details in the following non-limiting examples.

## Examples

Example 1: Methods of analysis

Example 1.1: Determination of total protein

The total protein content (true protein) of a sample is determined by:

1) Determining the total nitrogen of the sample following ISO 8968-1/2IIDF 020-1/2-Milk - Determination of nitrogen content - Part 1/2: Determination of nitrogen content using the Kjeldahl method.

2) Determining the non-protein nitrogen of the sample following ISO 8968-4IIDF 020-4-Milk - Determination of nitrogen content - Part 4: Determination of non-protein-nitrogen content.

3) Calculating the total amount protein as ($m_{total}$ nitrogen - Mnon-protein-nitrogen)*6.38.

Example 1.2: Determination of whey proteins: soluble CMP, alpha-lactalbumin and beta-lactobulin

The content of soluble CMP, alpha-lactalbumin and beta-lactobulin was analyzed by size exclusion high performance liquid chromatography (SE-HPLC). A Waters 600 E Multisol-vent Delivery System, a Waters 700 Satellite Wisp Injector and a Waters H90 Program-mable Multiwavelength Detector (Waters, Milford, MA, USA) were used. The elution buffer was composed of 0.15 M $Na_2SO_4$, 0.09 M KH2PO4 and 0.01 M K2HPO4. The flow rate was 0.8 mL min-1 and the temperature 20°C.

Twenty-four hours prior to analysis, suspensions of the microparticulated and denatured whey protein compositions were prepared by using a sodium phosphate buffer (0.02 M) to obtain a final protein content of 0.1% (w/v). In addition, standard solutions of alpha-lactalbumin (Sigma-Aldrich Chemie GmbH, Steinheim, Germany) and beta-lactoglobulin (Sigma- Aldrich Chemie GmbH), and caseinomacropeptide at a concentration of 1 mg mL-1 were prepared. Prior to injection, the solutions were stirred and filtered (0.22 micron). A 25 microL sample was injected. The absorbance was recorded at 210 and 280 nm. For all the samples microparticulated and denatured whey protein compositions and the standards, the total protein content was determined according to Example 1.1.

Quantitative determination of the contents of native alpha-lactalbumin, beta-lactoglobulin and caseinomacropeptide was performed by comparing the peak areas obtained for the corresponding standard proteins with those of the samples.

Example 1.3: Determination of the water content

The water content of a food product is determined according to ISO 5537:2004 (Dried milk - Determination of moisture content (Reference method)).

Example 1.4: Determination of ash content

The ash content of a food product is determined according to NMKL 173:2005 "Ash, gravimetric determination in foods". NMKL is an abbreviation for "Nordisk Metodikkomite for Naringsmidler".

Example 1.5: Determination of the total amount of lactose

The total amount of lactose is determined according to ISO 5765-2:2002 (IDF 79-2: 2002) "Dried milk, dried ice-mixes and processed cheese - Determination of lactose content - Part 2: Enzymatic method utilizing the galactose moiety of the lactose".

Example 1.6: Determination of the dry weight of a solution

The dry weight of a solution may be determined according NMKL 110 2nd Edition, 2005 (Total solids (Water) - Gravimetric determination in milk and milk products). NMKL is an abbreviation for "Nordisk Metodikkomite for Nasringsmidler".

The water content of the solution can be calculated as 100% minus the relative amount of dry-matter (% w/w).

Example 1.7: Determination of the degree of denaturation

The denaturation degree of the proteins of the microparticulated and denatured whey protein compositions was analyzed by size exclusion high performance liquid chromatography (SE-HPLC). A Waters 600 E Multisolvent Delivery System, a Waters 700 Satellite Wisp Injector, and a Waters H90 Programmable Multiwavelength Detector (Waters, Milford, MA, USA) were used. The elution buffer was composed of 0.15 M $Na_2SO_4$, 0.09 M $KH_2PO_4$ and 0.01 M $K_2HPO_4$. The flow rate was 0.8 mL min-1 and the temperature 20°C.

Twenty-four hours prior to analysis, suspensions of the microparticulated and denatured whey protein compositions were prepared by using a sodium phosphate buffer (0.02 M) to obtain a final protein content of 0.1% (w/v). In addition, standard solutions of alpha-lactalbumin (Sigma-Aldrich Chemie GmbH, Steinheim, Germany) and beta-lactoglobulin (Sigma-Aldrich Chemie GmbH), and caseinomacropeptide at a concentration of 1 mg mL per were prepared. Prior to injection, the solutions were stirred and filtered (0.22 micron). A 25 microL sample was injected. The absorbance was recorded at 210 and 280 nm. For all the samples denatured whey protein compositions and the standards, the total protein content was determined according to Example 1.3.

A quantitative analysis of the native whey protein content was performed by comparing the peak areas obtained for the corresponding standard proteins with those of the samples. Afterwards, the denatured whey protein content of the micropartulaed and denatured whey protein compositions were calculated by considering the total protein content of the samples and their quantified native protein. The degree of denaturation was calculated as ($W_{totalprotein}$ - $W_{soluble\ protein}$)/$W_{total\ protein}$ * 100%, wherein $W_{total\ protein}$ is the weight of total protein and $W_{soluble\ protein}$ is the weight of native soluble protein.

Example 1.8: Quantification of the amount of insoluble particles

The amount of insoluble whey protein particles having a particles size in the range of 0.5-10 micron (effectively encompassing the size range 0.5-10.49 micron) of a denatured whey protein composition is determined using the following procedure:

1. Make a 5% (w/w in water) suspension of the sample to be tested.
2. Let the resulting suspension rehydrate for one hour with gentle agitation (stirring).
3. Homogenize the suspension at 100 bar.
4. Centrifuge a first portion of the suspension at 15000 g for 5 minutes.
5. Collect the resulting supernatant and analyse for total protein (true protein). The amount of total protein of the supernatant is referred to as "A".
6. Analyse a second portion of the suspension (not subjected to centrifugation) for total protein (true protein). The amount of total protein of the suspension is referred to as "B".
7. Subject a third portion of the suspension to particle size distribution analysis by static light scattering and determine the percentage by volume of the particles that has a particle size >10 micron, this percentage is referred to "C".
8. Determine the amount (% w/w relative to total protein) of insoluble whey protein particles having a particle size the range of 0.5-10 micron as:

$$P_{1-10} = (((B - A)/B)*100\%)-C$$

9. Repeat steps 4-5, but centrifuging at 3000 g for 5 minutes instead of 15000 g (only the largest part of the particles will be removed). The total protein of the supernatant of step 9 is referred to as "D".
10. Determine the amount (% w/w relative to total protein) of insoluble whey protein particles having a particle size in the range of 0.5-1.5 micron as:

$$P_1 = ((D-A)/B)*100\%$$

The procedure is performed at approx. 15 degrees C using a refrigerated centrifuge 3-30K from SIGMA Laborzentrifugen GmbH and 85 mL tubes (Order no. 15076), in which the 5% suspension is filled so that the total weight of tube and sample amounts to 96 g.

Particle size distribution analysis is performed using a Malvern Mastersizer (Micro Particle Sizer, Malvern Instruments Ltd., Worcestershire, UK).

Parameters: Particle refractive index 1.52 (real part), 0.1 (imaginary part) and dispersant refractive index 1.33 were used.

Data analysis: The data was fitted using the Mie scattering model (residuals < 2%).

Example 1.9: Measurement of water activity

Water activity is measured by the value $a_w$. Water activity is a measurement of the amount of free water present in a sample. The $a_w$-value is within the range of 0 (absolute dryness) and 1 (condensing humidity). An $a_w$ value of 0.5 indicates that haft the water in the sample is bound.

Water activity is measured at room temperature in a "Novasina LabSwift-aW". A sample is placed in a dish without a lid and inserted in the "LabSwift-aW" where the $a_w$-value can be read.

Example 2: Microparticulated and denatured whey protein composition according to the invention

A microparticulated and denatured whey protein composition was prepared using the following method:

Solution:

An aqueous solution comprising a sweet whey protein concentrate was prepared by dissolving the sweet whey protein concentrate in water to obtain a dry-matter content of 16% and adjusting the pH to 6.4.

Denaturation and microparticulation:

Denaturation and microparticulation was performed in a 6+6 Scraped Surface Heat Ex-changer (SSHE), APV Shear Agglomerator, from APV/SPX, Denmark.

After passage through a holding cell (about 60 sec) the product was cooled down in a SSHE followed by a plate heat-exchanger (PHE) to about 10°C.

During the heat-treatment (about 80 degrees C for a duration of about 10 minutes) the protein was denatured and because of the shear the whey protein was microparticulated and particles having a size of 0.5-10 micron were formed.

The product suspension was pumped to a storage tank, and some of it was subsequently dried to a powder by means of spray-drying. The dried microparticulated and denatured whey protein concentrate powder comprises about 78-82% protein.

The aqueous whey protein solution and the suspension obtained from the heat denaturation/microparticulation were subsequently characterised with respect to content of native dry-matter, total protein, total fat, total lactose, ash content, content of native beta-lactoglobulin, content of native alpha-lactalbumin, content of native CMP, degree of microparticulation, particle size and pH.

The results of the characterisation of the solution of sweet WPC and the suspension of denatured, microparticulated whey protein are presented in Table 1. As can be seen, significant amounts of native beta-lactoglobulin and alpha-lactalbumin of the sweet whey solution has been denatured (approx. 88% beta-lactoglobulin and approx. 69% alpha-lactalbumin), whereas the level of CMP seems to be nearly the same in the product suspension and in the sweet whey solution.

Table 1 Comparison of the composition of the sweet whey solution and a microparticulated and denatured whey protein suspension according to the invention.

|  | Solution of sweet WPC | Product suspension | Dried product |
|---|---|---|---|
| % Dry matter | Approx. 16 | Approx. 16 | 100 |
| % Total protein | 13.0 | 13.0 | 78-82 |
| % Fat | 0.90 | 0.90 | 9 |
| % Lactose | 0.45 | 0.45 | 9 |
| % Ash | 0.55 | 0.55 | 3.5 |

(continued)

| | Solution of sweet WPC | Product suspension | Dried product |
|---|---|---|---|
| % Native beta-lactoglobulin relative to total protein | 55.0 | 6.5 | |
| % Native alpha-lactalbumin relative to total protein | 18.0 | 5.5 | |
| % native CMP of total protein** | 13.5 | 13.5 | |
| Particle degree* | < 10 | Approx. 67 | |
| Particle size | 0.1-1 micron | 0.5-10 micron | 0.5-10 micron |
| pH | 6.4 | 6.4 | |
| *Content of insoluble whey protein particles in the size range 0.5-10 micron (% w/w total protein) | | | |

The non-protein-nitrogen content of the product suspension was 0.15% (w/w).

The spray-dried denatured and microparticulated whey protein composition had a solid content of dry-matter content of approx. 95% and the dried composition comprises 80% microparticulated and denatured whey protein.

Example 3: Preparation of pasta

Several fresh pastas were prepared and subjected to cooking and overcooking. The texture was evaluated and compared. The results of the comparison are given in Table 2, shown under example 4.

Procedure

All dry ingredients are mixed together in a Hobart N-50 with dough adaptor hook.

Water is slowly added to the dry ingredients to form a dough. The dough is mixed until it is homogeneous.

After mixing of the dough, the dough is rolled out on a manual pasta machine (Pasta Queen, Model 150mm-DELUXE ) and allowed to rest for 24 hours at 5°C. Thickness of the pasta: rolled down from "mark 1" to "mark 5." (about 1 - 2 mm) The pasta was then rolled through "Tagliatelle device" and then boiled for 2 min in tap water without salt.

Two different wheat flours were used for producing the pasta. Reform flour, which typically has a gluten content in the range of 9 -11% by dry weight and Durum Semolina flour. Both flours is from Havnemøllerne, DK. The egg white powder was from Sanovo Foods A/S, DK.

The ingredients are given as percentage by weight of the resulting dough, i.e. wet weight. For each pasta, a dough of 800 g was made.

3.1. Fresh pasta comprising microparticulated and denatured whey protein composition

| Ingredient | Amount (% by weight of the dough) |
|---|---|
| Wheat Flour, Reform flour | 15,38 |
| Wheat flour, Durum Semolina | 31,60 |
| Microparticulated and denatured whey protein composition according to example 2 | 14,68 |
| Egg white powder, | 3,49 |
| Salt | 0,46 |
| Water | 34,39 |
| TOTAL | 100 |

3.2 Fresh pasta comprising WPI/Calcium Caseinate

Miprodan® 40 (Aria Foods) is calcium caseinate. The WPI Lacprodan® DI-9250 is Whey Protein Isolate from Aria Food Ingredients.

| Ingredient | Amount (% by weight of the dough) |
|---|---|
| Wheat Flour, Reform flour | 16,29 |
| WPI - Lacprodan® DI-9250 | 6,21 |
| Wheat flour, Durum Semolina | 33,45 |
| Calcium Caseinate, Miprodan® 40 | 9,31 |
| Egg white powder, | 3,61 |
| Salt | 0.48 |
| Water | 30,65 |
| TOTAL | 100 |

Besides from the data shown in table 2, it was observed that the use of miceller casein isolate (MCI) and caseinate affect the taste and texture of the pasta negatively, resulting in off-taste/oxidation of the product. In addition, the water absorption of caseinate was too high, providing too much swelling of the pasta product.

3.3 Fresh pasta comprising high content of wheat gluten

The gluten source was from wheat, Vital wheat gluten from KRONER STÄRKE

| Ingredient | Amount (% by weight of the dough) |
|---|---|
| Wheat Flour, Reform flour | 12,91 |
| Wheat flour, Durum Semolina | 29,15 |
| Microparticulated and denatured whey protein composition according to example 2 | 14,68 |
| Vital wheat gluten | 5,00 |
| Egg white powder | 3,42 |
| Salt | 0,45 |
| Water | 34,39 |
| TOTAL | 100 |

3.4 Fresh pasta comprising microparticulated and denatured whey protein composition and added fibre

| Ingredient | Amount (% by weight of the dough) |
|---|---|
| Wheat Flour, Reform flour | 12,91 |
| Wheat flour, Durum Semolina | 29,15 |
| Microparticulated and denatured whey protein composition according to example 2 | 14,68 |
| Egg white powder | 3,42 |

(continued)

| Ingredient | Amount (% by weight of the dough) |
|---|---|
| Salt | 0,45 |
| Water | 34,39 |
| Oat fibre, Vitacel HF 501-30 | 5,00 |
| TOTAL | 100 |

The oat fibre was provided by addition of Vitacel Oat fibre HF 501-30, from LCH A/S - Egegardsvej 41, DK-2610 Rødovre, Denmark.

The fresh pasta dough prepared had acceptable texture.

3.5 Fresh pasta comprising microparticualted and denatured whey protein composition and added calcium

| Ingredient | Amount (% by weight of the dough) |
|---|---|
| Wheat Flour, Reform flour | 14,91 |
| Wheat flour, Durum Semolina | 31,15 |
| Microparticulated and denatured whey protein composition according to example 2 | 14,68 |
| Egg white powder | 3,42 |
| Salt | 0,45 |
| Water | 34,39 |
| Capolac® MM-0525BG | 1,00 |
| TOTAL | 100 |

Calcium was added by use of Capolac® MM-0525BG from Arla Foods Ingredients.

3.6 Commercial pasta

| Ingredient | Amount (% by weight of the dough) |
|---|---|
| Wheat Flour, Reform flour | 18,75 |
| Wheat flour, Durum Semolina | 47,65 |
| Egg | 3,49 |
| Salt | 0,46 |
| Water | 29,65 |
| TOTAL | 100 |

Example 4 Cooking test of pasta

The fresh pasta's prepared in Example 3 were subjected to a cooking test. The fresh pasta was boiled in water for 2 mins, and some also for 8 minutes. The texture was evaluated by a sensory panel and the results are given below in Table 2.

Table 2

| Pasta | 2 min | 8 min | Comments |
|---|---|---|---|
| A. Fresh pasta with denatured and microparticulated whey protein composition (Example 3.1) | Smooth, non-sticky surface | Still smooth, non-sticky surface; also still retains strong/ elastic/ non fragile texture | |
| B. Fresh pasta with WPI Lacprodan® DI-9250 /Miprodan® 40 (Example 3.2) | Uneven surface structure after boiling. Sticky; fragile | N/A | Layering/flaking when rolled out. (rough/uneven surface) |
| C. Fresh pasta with added wheat gluten (Example 3.3) | Greyish colour; Sticky Non-Acceptable texture | N/A | No benefits is seen of the added gluten |
| D. Fresh pasta with denatured whey protein composition and Fibre) (Example 3.4) | Texture as for A. | N/A | |
| E. Fresh pasta with denatured and microparticulated whey protein composition and added calcium Capolac® MM-0525BG (Example 3.5) | Like A No influence of the added Calcium is seen/ noticed | N/A | |
| F. Commercial fresh pasta (Example 3.6) | Sticky, acts like commercial produced pasta | Sticky (lumps together); *al dente* texture lost; fragile | |
| N/A= not applicable. | | | |

Example 5: Comparing pasta with microparticulated and denatured whey protein as compared to other protein sources.

7 samples of pasta dough was prepared, one reference with no protein added besides from the protein in flour and egg white powder and 6 samples with egg white powder and different types of protein added:
Reference: Pasta comprising ingredients as mentioned in example 3.6.

Sample 1: Pasta with microparticulated and denatured whey protein added as mentioned in example 3.1.

Sample 2: Pasta with isolated soy protein (SUPRO XT 219 IP) instead of microparticulated and denatured whey protein. Otherwise, the pasta is made as in example 3.1.

Sample 3: Pasta with cGMP added in instead of microparticulated and denatured whey protein. Otherwise, the pasta is made as in example 3.1. cGMP (casein glycomacropeptide) and CMP (caseinomacropeptide) refers to the the same compound and is in the context of the present invention used interchangeable. The cGMP used is Lacprodan cGMP-20.

Sample 4: Pasta with standard whey protein material which is not microparticulated and denatured (Lacprodan® 80) instead of microparticulated and denatured whey protein. Otherwise, the pasta is made as in example 3.1.

Sample 5: Pasta with a soy protein concentrate (PROCON 2000 IP) instead of microparticulated and denatured whey protein. Otherwise, the pasta is made as in example 3.1.

Sample 6: Pasta with a soy protein isolate (Alpha 5812 IP) instead of microparticulated and denatured whey protein. Otherwise, the pasta is made as in example 3.1.

The content of solids in samples 1-6 and the reference are shown in table 3 below:

Table 3:

| | Reference | S1 | S2 | S3 | S4 | S5 | S6 |
|---|---|---|---|---|---|---|---|
| Protein (%) | 11.05 | 20.48 | 21,0 | 19.87 | 19.75 | 18.72 | 19.82 |
| Fat (%) | 0.76 | 1.61 | 1.35 | 0.56 | 1.43 | 0.55 | 1.28 |
| Carbohydrate (%) | 43.71 | 31.24 | 31.02 | 31.14 | 31.60 | 31.02 | 31.02 |
| Total solids (%) | 60.16 | 57.79 | 57.45 | 57.75 | 57.45 | 57.16 | 57.45 |
| Moisture (%) | 39.84 | 42.21 | 42.55 | 41.67 | 42.55 | 42.84 | 42.55 |

5.1 Evaluation of pictures taken of dough from different samples

In figure, 1 a) - h) is the pasta dough prepared from the 6 samples and the reference shown.

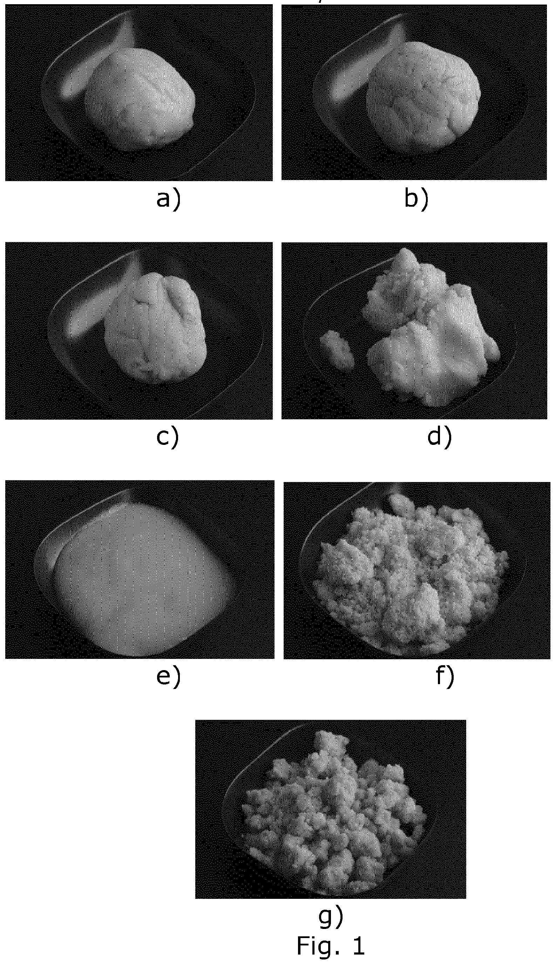

Figure 1, a) shows a pasta dough with the reference. Figure 1, b) shows a pasta with sample 1. Figure 1, c) shows a pasta with sample 2. Figure 1, d) shows a pasta with sample 3. Figure 1, e) shows a pasta with sample 4. Figure 1, f) shows a pasta with sample 5. Figure 1, g) shows a pasta with sample 6.

It is shown that sample 4 made with whey protein that was not microparticulated was very liquid and it was not possible to obtain a dough suitable for preparing pasta bands. In addition, sample 5 and 6 with a soy concentrate and soy isolate respectively resulted in a dough that was crumbeling and which was not possible to form into a dough, which could be rolled out and prepared to pasta bands. The, pasta dough made with cGMP (sample 3) became very sticky and with a short texture, and it was also not suitable for preparing pasta bands. However, as shown in figure b) a pasta made with denatured and microparticulated whey protein (sample 1) resulted in a firm pasta dough that could be processed into pasta bands. In addition, a pasta with the soy protein isolate SUPRO XT 219 IP resulted in a dough suitable for preparing pasta bands. Also, the reference resulted in a dough suitable for preparing pasta band.

Texture analysis and sensoric test was made of the reference and the pasta made with microparticulated and denatured whey (sample 1) and pasta made with SUPRO XT soy protein (sample 2).

5.2 Evaluation of pictures taken of uncooked pasta at different time

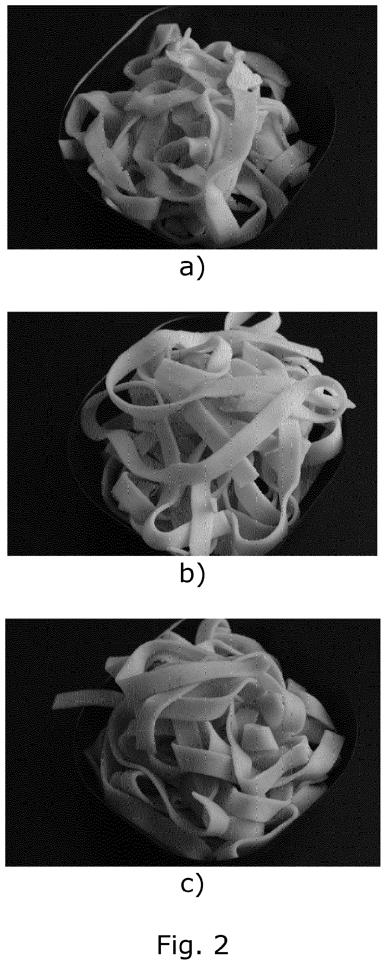

First, pictures was taken of pasta bands made from the reference dough and dough from sample 1 and 2. The pictures was taken of uncooked pasta bands and is shown in figure 2 a) - c).

Figure 2, a) shows a picture of uncooked pasta band of the reference pasta. From the picture it is shown that the reference pasta looks sticky and compact. The pasta is collapsing on the plate.

Figure 2, b) shows a picture of sample 1 which is a fresh pasta with microparticulated and denatured whey protein. The pasta appears more white and has a smooth surface. In addition, the pasta bands is less sticky and does not collaps and appear less dense.

Figure 2, c) shows a picture of uncooked pasta bands of sample 2. The pasta looks more brownish with a smooth surface, a bit more dense in volume than the pasta of sample 1 (figure 2, b), but less than the reference pasta in figure 2, a).

5.3 Hardness of cooked pasta at different time

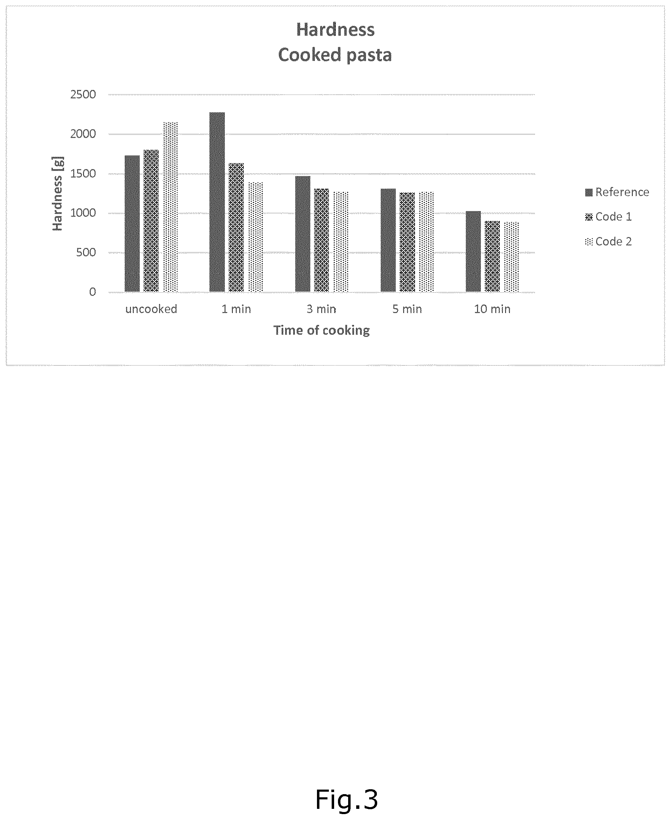

Texture analysis (hardness) was made on the pasta made from sample 1 and 2 and the reference and the result is shown in figure 3.

Code 1 in figure 3 is a pasta made according to sample 2 (pasta made with SUPRO soy) and Code 2 in figure 3 is a pasta made according to sample 1 (pasta with microparticulated whey protein).

Hardness was measured by texture analysis and was measured of uncooked pasta and pasta cooked for 1 minute, 3 minutes, 5 minutes and 10 minutes.

The cooked pasta was made by boiling 100 g fresh pasta in 1.5 L distilled water with 6.5 g salt. After 1, 3, 5 or 10 minutes, the cooked pasta was taken from the water, shaken free of water and immediately measured on the texture analyzer. % repetitions were made for each sample and the experiment was repeated twice. Data was analysed using Tukey pairwise comparison.

Figure 3 shows the hardness of the uncooked and cooked pasta (1, 3, 5 and 10 min). From figure 3, it can be seen that the uncooked pasta dough with microparticulated and denatured whey protein added (code 2) is significantly harder than the reference pasta made with whole egg and no added whey protein and than the pasta with soy protein SUPRO added. Furthermore, figure 3 shows that after 3 to 5 minutes of cooking, all three samples had similar hardness.

Thus, addition of a microparticulated and denatured whey protein composition to pasta does not negatively affect the quality of the pasta with respect to overcooking.

5.4 Swelling measured on pasta in relation to cooking time

Swelling of pasta was measured on sample 1 (pasta with microparticulated and denatured whey protein), sample 2 (pasta with SUPRO XT 219 soy protein) and the reference pasta (pasta made with whole egg).

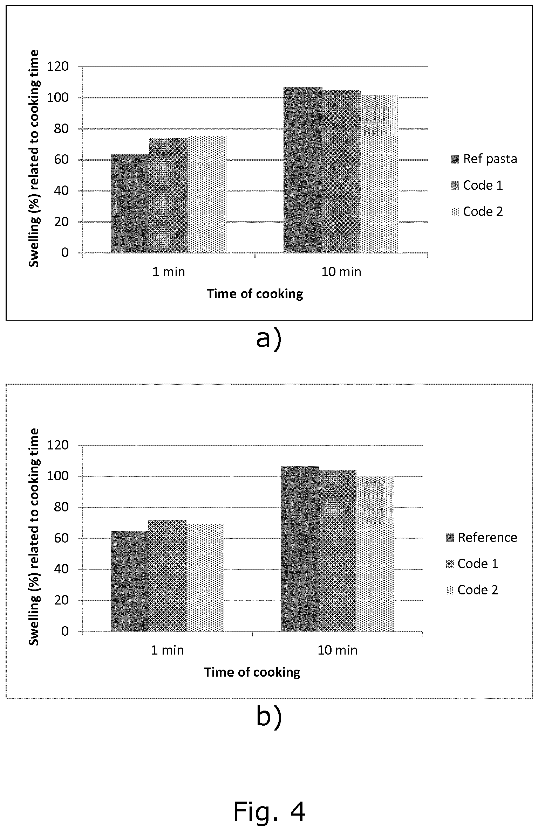

Code 1 in figure 4 is a pasta made according to sample 2 (pasta made with SUPRO soy) and Code 2 in figure 4 is a pasta made according to sample 1 (pasta with microparticulated and denatured whey protein).

The cooked pasta was made by boiling 50 g fresh pasta in 1.5 distilled water with 6.5 g salt. After 1 or 10 minutes, the cooked pasta was taken from the water, shaken free of water and left on a sieve to drain excess water for 2 minutes. Afterwards, the pasta was weighed out. The increase in weight of the pasta (% swelling) was calculated. Measurement of each sample was repeated three times and the experiment was repeated twice.

In figure 4, a) is the swelling of experiment 1 shown for the reference, sample 1 and sample 2 cooked in 1 and 10 minutes respectively.

In figure 4, b) is the swelling of experiment 2 shown.

From figure 4, a) and b), it is shown that swelling is increased with increased cooking time. In addition, it is shown that the swelling degree obtained by the three samples is similar. This indicates that addition of a microparticulated and denatured whey protein to pasta does not affect swelling negatively.

5.5 Dry matter analysis

The dry matter content in sample 1, sample 2 and the reference was measured by evaporating all water from the samples by drying a known amount of sample pasta at a constant temperature of $102\pm2°C$ in a drying oven until constant weight.

The dry matter content in sample 1, sample 2 and the reference is given in table 4 below.

Table 4:

|  | Reference | Sample 2 | Sample 1 |
|---|---|---|---|
| Dry matter content (%) | 64.49 | 61.47 | 61.49 |

Thus, the dry matter content in the reference pasta is higher than the pasta with SUPRO soy protein and microparticulated and denatured whey protein. Hence. the pasta with microparticulated and denatured whey protein may comprise more water than the reference pasta.

Example 6: Investigate influence of increased water content on texture of pasta

7 samples of pasta dough was prepared having the recipe of:

- Sample i) The reference dough according to example 3.6
- Sample ii) Pasta dough according to example 3.1
- Sample iii) Pasta dough with isolated soy protein (SUPRO XT 219 IP) instead of microparticulated and denatured whey protein. Otherwise is the pasta made as in example 3.1
- Sample iv) Pasta dough as in example 3.1 but with 1.5% additional water added
- Sample v) Pasta dough as in example 3.1 but with 2.0% additional water added
- Sample vi) Pasta dough as in example 3.1 but with 2.5% additional water added
- Sample vii) Pasta dough as in example 3.1 but with 3.0% additional water added

Texture analyses and sensoric test was made of the samples.

6.1 Evaluation of pictures taken of dough

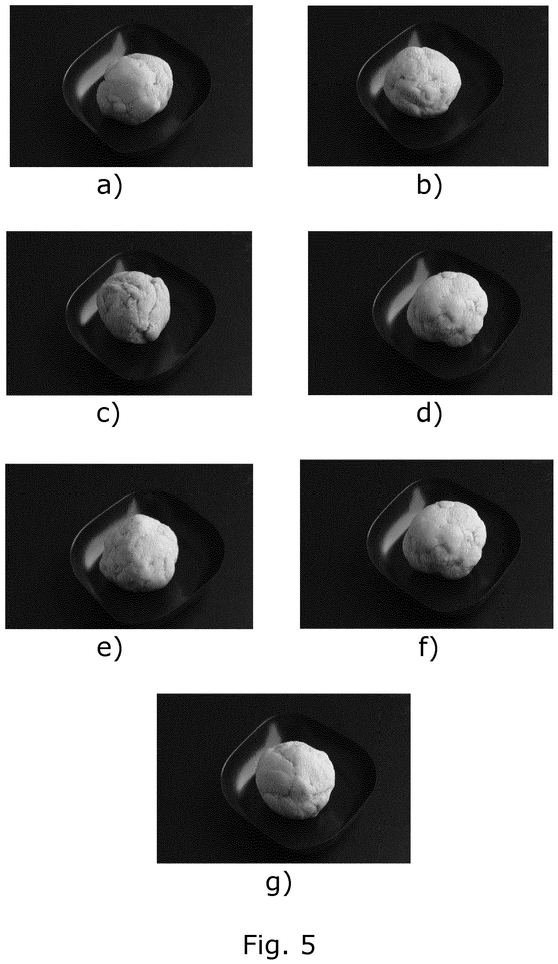

In figure 5 a) - g) pictures of the pasta dough prepared according to sample i) to vii) is shown. It is shown that the recipies with additional water is suitable for processing to a pasta dough that can be rolled out.

## 6.2 Evaluation of pictures taken of uncooked pasta bands

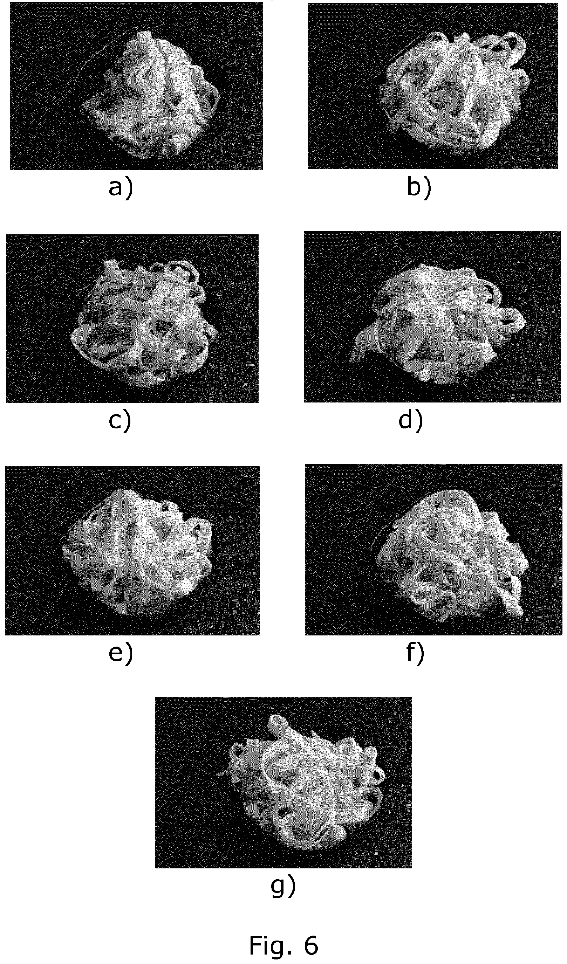

Pictures was taken of pasta bands made from the reference dough (sample i)) and dough according to sample ii) to vii). The pictures was taken of uncooked pasta bands and is shown in figure 6 a)- g).

Figure 6, a) shows the reference pasta (sample i)) made according to the recipe shown in example 3.6. The uncooked pasta is very sticky and looks dense and compact. The uncooked pasta collapses on the plate.

Figure 6, b) shows uncooked pasta with microparticulated and denatured whey protein according to example 3.1 (sample ii)). The pasta appears more white and dry/non-sticky and has a smooth surface.

Figure 6, c) shows the uncooked pasta of sample iii) with soy protein instead of microparticulated whey protein. The pasta looks more brown with a smooth surface and less sticky compared to the reference pasta according to sample i).

Figure 6,d) shows uncooked pasta according to sample iv), i.e. as in sample ii) but with additional 1.5% water. As compared to sample ii) (figure 5,b), the uncooked pasta of sample iv) provides a more smooth dough. In addition, the dough does not appear sticky or collapsed.

Figure 6, e) shows uncooked pasta according to sample v), i.e. as in sample ii) but with additional 2.0% water. The dough appears more smooth than dough iv), but without getting sticky or collapsing on the plate.

Figure 6, f) shows uncooked pasta according to sample vi), i.e. as in sample ii) but with additional 2.5% water. The dough appears more smooth than dough v), but without getting sticky or collapsing on the plate.

Figure 6, g) shows uncooked pasta according to sample vii), i.e. as in sample ii) but with additional 3.0% water. It is shown that the more added water, the more smooth does the dough appear without being sticky or collapsing on the plate.

Dough handling properties of sample vii) were besides evaluated to be the best and most smooth of all samples.

## 6.3 Dry matter analysis

The dry matter content in pasta dough prepared from the samples i) to vii) was measured by evaporating all water from the samples by drying a known amount of sample pasta at a constant temperature of $102 \pm 2°C$ in a drying oven until constant weight.

The dry matter content for the dough prepared according to sample i) to vii) is given in table 5.

Table 5:

|  | Referen ce Sample i) | Dough of sample ii) | Dough of sample iii) | Dough of sample iv) | Dough of sample v) | Dough of sample vii) | Dough of sample vii) |
|---|---|---|---|---|---|---|---|
| Dry matter content (%) | 64.40 | 60.91 | 61.01 | 59.97 | 59.67 | 59.63 | 59.05 |

Thus, the dry matter content in the reference pasta is higher than the dry matter content of all the other pasta dough. The dry matter content is as expected decreased as the water content is increased.

## 6.4 Hardness of fresh pasta dough and cooked pasta

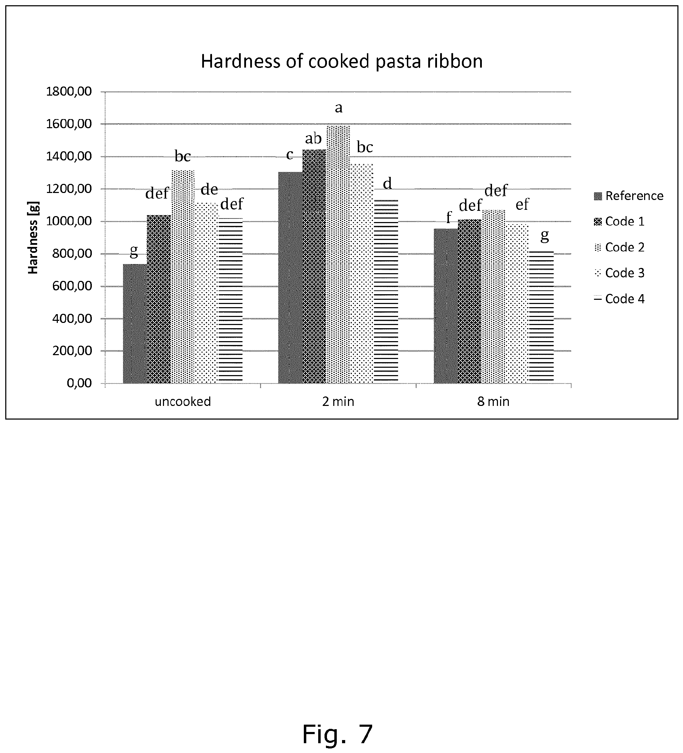

Texture analysis (hardness) was made on the pasta and the result is shown in figure 7. Hardness by texture analysis was measured of fresh pasta dough and pasta dough cooked for 2 minutes and 8 minutes respectively, with AACC 16-50 internal standard method "AACC Spagetti Firmness pta3" at ambient temperature. The pasta dough was measured the same day as production after covered with plastic and stored at refrigerator for 2-4 hours. The dough was temperated at RT approximately 1 hour before measurement.

The cooked pasta was prepared by cooking 100 g fresh pasta in 1.5 L distilled water with 6.5 g salt. After 2 and 8 minutes, the cooked pasta was taken from the water, shaken free of water, and immedially measured on the texture analyzer. Minimum 5 repetitions was made for each sample of pasta.

Data was analysed using Tukey pairwise comparison.

In figure 7, the reference is the reference of sample i) and code 1 shows sample iii) with SUPRO soy protein. Code 2 shows sample ii) with microparticulated whey protein, while code 3 shows sample v) with 2% added water, and code 4 shows sample vii) with 3% added water

Figure 7 shows the hardness of the uncooked pasta dough (reference, SUPRO soy, microparticulated whey protein, +2.0% water, +3.0% water). From figure 7, it can be seen that a pasta dough with microparticulated and denatured whey protein added is significantly harder than the reference pasta made with egg white powder and no added whey protein and than the pasta with soy protein SUPRO added. Furthermore, figure 7 shows that after 2 and 8 minutes of cooking, the reference pasta and the pasta with microparticulated and denatured whey protein and additional 2% water added are comparable in hardness, even though the dough with additional 2% water added comprises 7% more water than the reference. Hence, a pasta made with microparticulated and denatured whey protein binds more water without compromising the quality (hardness).

6.5 Evaluation of pictures taken of cooked pasta with different amount of water added

80 g pasta bands was cooked 2 minutes in 1.5 L distilled water with 6.5 g salt, the pasta was drained for water, left in the pot for 10 minutes, and then poured out of the pot.

Pictures was taken of pasta bands made from:

- the dough according to sample i) (reference pasta),
- dough of sample ii) (pasta with microparticulated and denatured whey protein), sample iii) (pasta with SUPRO soy protein),
- dough of sample v) (pasta with microparticulated and denatured whey protein and 2% extra added water),
- dough of sample vii) (pasta with microparticulated and denatured whey protein and 3% extra added water)

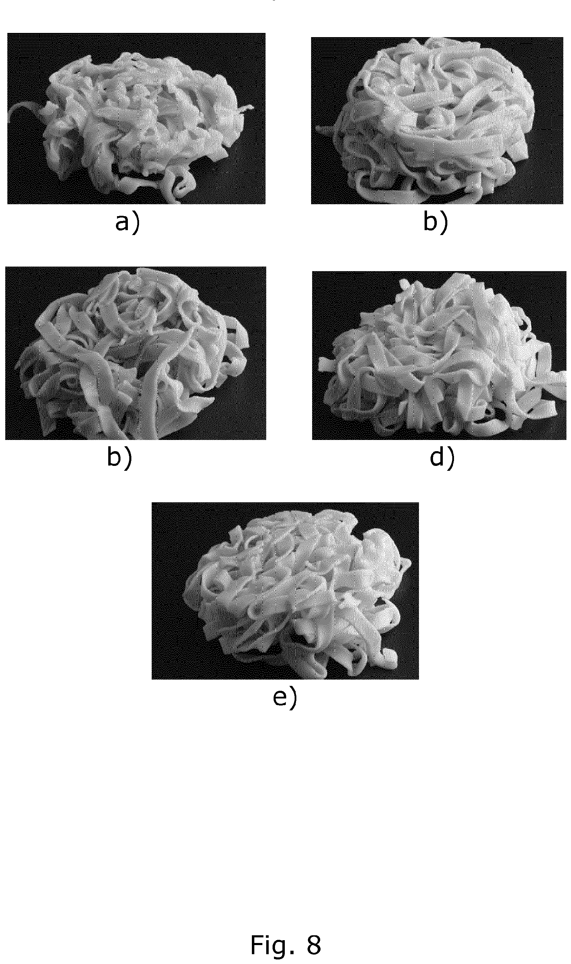

The pictures was taken of cooked pasta bands and are shown in figures 8 a) - e).

Figure 8, a) shows the cooked reference pasta (sample i)) made according to the recipe shown in example 3.6. The cooked pasta looks very compact and dense.

Figure 8, b) shows cooked pasta with microparticulated whey protein according to example 3.1 (sample ii)). The pasta is double the size than the reference even though the amount/weight is the same. The pasta does not look as sticky and compact as the reference.

Figure 8, c) shows the cooked pasta of sample iii) with soy protein instead of microparticulated whey protein. The pasta looks more brown than the reference (sample i) and sample ii) and looks a bit more loose. The pasta does not keep the shape from the pot.

Figure 8, d) shows cooked pasta according to sample v), i.e. as in sample ii) but with additional 2.0% water. The pasta with 2% added water looks appetizing and not dense.

Figure 8, e) shows cooked pasta according to sample vii), i.e. as in sample ii) but with additional 3.0% water. The pasta is a bit more compact as compared to the cooked pasta of sample ii) (figure 8, b)), but less than the reference (sample i) in figure 8, a) and sample iii) (pasta with soy protein).

Thus, from the picures shown in figure 8, it looks like the pasta with microparticulated whey protein and additional 2% water is the most optimal pasta.

Example 7: sensory evaluations of pasta with microparticulated and denatured whey protein added versus SUPRA soy protein added

For comparing a pasta made with microparticulated and denatured whey protein according to example 3.1 with a pasta made with added SUPRO soy protein, sensory evaluations were made.

25 g cooked pasta of example 3.1 (sample 1 in example 5 ) and 25 g cooked pasta with SUPRO soy protein (sample 2 in example 5) was presented in a black plastic tray to a test panel consisting of 9 persons. The test panel was trained 1 day ahead of the evaluation day and the test was blind test. All samples was given twice to the test person. Data was analysed using the Tukey pairwise comparison (minitab17)

The sensory attributes were evaluated on a scale 1-10. "1" was given for little/low value, and "10" was given for much/high.

**Surface heterogeneity:** Defines the surface and the edges of the pasta, the score "1" is where the pasta is rugged and the score 10 is where the pasta is smooth. The surface heterogeneity is evaluated visually.

**Compactness:** Defines how well the pasta sample fills the tray. The score 1 is given when the pasta is compact where 10 is given when the pasta is light and fluffy. The compactness is evaluated visually.

**Stickiness:** The test persons grab the pasta between the thumb and index finger and define how the pasta sticks to the fingers after releasing. The stickiness is evaluated by use of fingers.

**Elasticity:** The test person should grab a pasta string and pull it lightly apart. Should define the elasticity. The elastcity is evaluated by use of fingers.

**Chewiness:** The test person chews a part of the sample 5 times and evaluate how the pasta dissociates in the mouth.

**Off-flavour:** The test person will evaluate whether any kind of off-flavour is detected in the pasta. Off-flavour was evaluated with a "yes" or "no".

**Smell:** the test persons evaluated whether the pasta has a smell. The smell was was evaluated with a "yes" or "no". In addition, the smell was described with a few words.

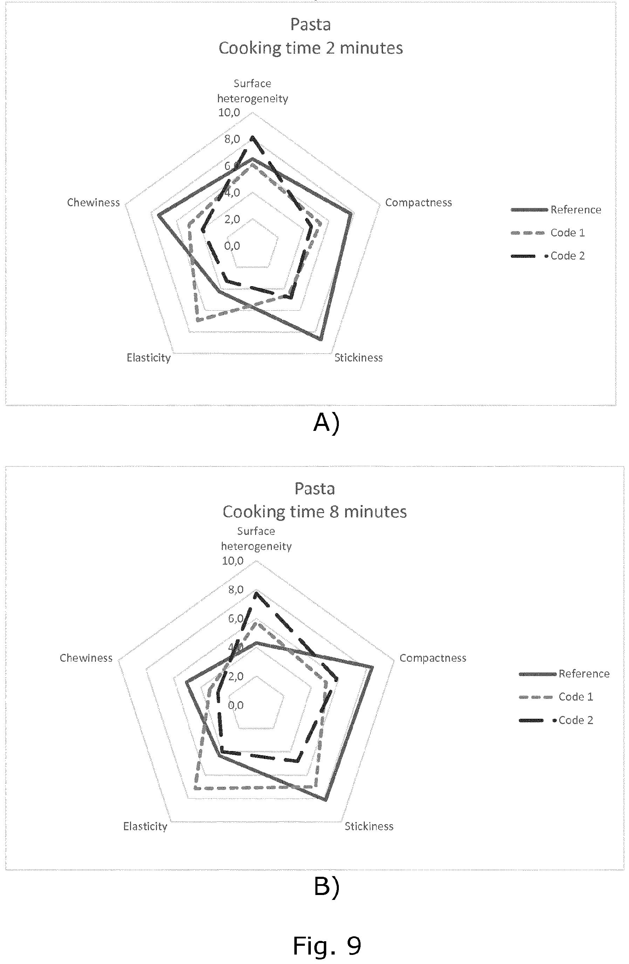

The result of the sensory test is shown in figure 9 A) and B). A) shows the sensory results of the three pastas after being cooked in 2 minutes, and B) shows the sensory results of the three pasta after being cooked in 8 minutes. Code 1 refers to the pasta made with SUPRO soy protein according to sample iii) and code 2 refers to the pasta made with microparticulated whey protein according to sample ii) and example 3.1.

From figure 9 A), it is shown that after 2 minutes of cooking, the pasta with microparticulated and denatured whey protein added is significantly different from the reference pasta with regard to compactness, stickiness and chewiness. However, the pasta with microparticulated and denatured whey protein does not differ significantly from the pasta with SUPRO soy protein on these parameters, but differs from SUPRO soy protein in that it is less elastic and the surface is more smooth.

After 8 minutes of cooking, the pasta with microparticulated and denatured whey protein were significant different in all attributes, except elasticity, from the reference pasta. Furthermore, after 8 minutes of cooking the pasta with microparticulated and denatured whey protein differs from the pasta with SUPRA soy protein in all attributes than compactness and chewiness.

In conclusion, the pasta with microparticulated and denatured whey protein added resulted in much better sensory evaluation than the reference pasta and the pasta with SUPRO soy protein.

Example 8: Stickiness test

Stickiness measurements was repeated where the pasta was stored for 10 minutes and 30 minutes, respectively, after cooking. This is to stimulate consumer experience.

100 g fresh pasta was cooked in 1.5 L distilled water with 6.5 g salt. After 2, 8 and 12 minutes, the cooked pasta was taken from the water, shaken free of water and measured on the texture analyzer after either 10 minutes or 30 minutes. A minimum of 5 repetitions were made for each pasta dough and the experiment was conducted twice. The stickiness was measured on Texture Analyzer TA XTPlus with 1 mm flat Perspex knife blade (A/LKB-F), 5 kg load cell, and at ambient temperature. Data was analyzed using Turkey pairwise comparison (Minitab17).

The stickiness test was performed on the following pasta doughs

| | |
|---|---|
| Reference: | Reference pasta according to sample i) and example 3.6 |
| Code 1: | Pasta with SUPRO soy protein added (sample iii) and example 3.2) |
| Code 2: | Pasta with microparticulated and denatured whey protein ( sample ii) and example 3.1) |
| Code 3: | Pasta as in example 3.1 but with extra 2.0% water added (sample v) |

The result of the stickiness test is shown in figure 10, A and B.

Figure 10, A)shows the stickiness of pasta cooked 2 minutes and rested for 10 minutes or 30 minutes. The figure shows that there is a difference in the stickiness after 10 minutes of rest between the reference and the other pasta doughs and the stickiness is decreased in the sample with additional water added to the dough with microparticulated and denatured whey protein as compared to no additional water added. After 30 minutes of rest, there is a significant difference between the pasta dough having microparticulated and denatured whey protein added as compared to the reference pasta and the pasta with soy protein. In addition, the figure indicates that addition of further water decreases the stickiness.

Figure 10, B shows that the stickiness of pasta cooked for 8 minutes and rested in 10 minutes is almost the same, while the pasta resting for 30 minutes had difference between the reference and the other samples and again the pasta with microparticulated whey protein and additional water had the lowest stickiness.

Overall, from figure 10 A) and B), it is observed that there is a tendency of the reference pasta to be more sticky than the pasta with microparticulated and denatured whey protein. This method for measuring stickiness is more easy to handle and manage in the lab and it seems to provide more realistic pictures of the stickiness perception as compared to sensory evaluation by a test panel.

Figure 10, C) shows the water activity of the 4 pasta doughs 1) to 4) mentioned above.

From figure 10, C), it is shown that the water activity in the 4 samples are similar.

Example 9: Texture analysis of pasta with different amounts of added whey protein (microparticulated and denatured)

Pasta dough was prepared as described in example 3, and 6 different doughs for pasta was prepared, 5 samples with different amounts of microparticulated and denatured whey protein added, but the remaining ingredients being the same and one reference, wherein the reference does not include addition of whey protein, but comprise egg white powder instead.

The pasta was rolled out similarly for the 6 different samples of pasta dough, i.e. rolled twice, one on each side. After the pasta has been rolled out to tagliatelle strips, they were place in an air-closed bag and placed in a refrigerator until the next day.

The composition of ingredients of the 6 samples of pasta dough is disclosed below:

Code 1: Sample with 3.5% microparticulated and denatured whey protein added
Code 2: Sample with 7.0% microparticulated and denatured whey protein added
Code 3: Sample with 11.5% microparticulated and denatured whey protein added
Code 4: Sample with 14.68% microparticulated and denatured whey protein added
Code 5: Sample with 18.18% microparticulated and denatured whey protein added
Code 6: Sample with 0% microparticulated and denatured whey protein added

In table 6 is the amount of ingredients in the pasta dough according to code 1-5 and the reference given.

Table 6:

| Ingredient | Code 1 (g by weight of the dough) | Code 2 (g by weight of the dough) | Code 3 (g by weight of the dough) | Code 4 (g by weight of the dough) | Code 5 (g by weight of the dough) | Reference (g by weight of the dough) |
|---|---|---|---|---|---|---|
| Wheat Flour Reform flour | 191.30 | 179.40 | 164.40 | 153.80 | 141.10 | 187.5 |
| Wheat flour, Durum Semolina | 390.30 | 367.20 | 337.20 | 316.0 | 292.70 | 476.5 |
| Microparticulated and denatured whey protein composition according to example 2 | 35.00 | 70.00 | 115.00 | 146.80 | 181.80 | - |
| Egg white powder, | 34.90 | 34.90 | 34.90 | 34.9 | 34.90 | 34.9 |
| Salt | 4.60 | 4.60 | 4.60 | 4.6 | 4.6 | 4.60 |
| Water | 308.35 | 320.20 | 332.05 | 343.90 | 355.75 | 296.5 |
| TOTAL | 964.45 | 976.30 | 988.15 | 1000 | 1011.85 | 1000 |

Below in table 7 is the amount of the total amount of nutrients in the samples given.

Table 7:

| Nutrient | Code 1 | Code 2 | Code 3 | Code 4 | Code 5 | Referenc e |
|---|---|---|---|---|---|---|
| Protein (%) | 13.28 | 15.58 | 18.52 | 20.48 | 22.84 | 11.05 |
| Fat (%) | 0.97 | 1.17 | 1.43 | 1.61 | 1.82 | 0.76 |
| Carbohydrat es (%) | 39.83 | 37.05 | 33.68 | 31.24 | 28.45 | 43.71 |
| Total solids (%) | 58.61 | 58.30 | 58.12 | 57.79 | 57.54 | 60.16 |
| Moisture (%) | 41.39 | 41.70 | 41.88 | 42.21 | 42.46 | 39.84 |
| Calcium (%) | 0.00 | 0.00 | 0.00 | 0.00 | 0.00 | 0.00 |

The pasta bands (tagliatelle strips) made from the 6 samples of dough for pasta (Code 1-5 and the reference) was cooked and sensory parameters analyzed.

9.1 - Pictures of cooked pasta

80 g of pasta dough in bands was cooked for 8 minutes in 1.5 L of distilled water with 6.5 g salt. The cooked pasta bands was drained for water and left in the pot for 30 minutes, and then poured out of the pot on a plate. A picture was taken of the cooked pasta, said pictures are shown in figure 11.

Figure 11, a) shows code 1 with 3.5% micropartuclated whey protein added. Figure 11, b) shows code 2 with 7.0% micropartuclated whey protein added. Figure 11, c) shows code 3 with 11.5% micropartuclated whey protein added. Figure 11, d) shows code 3 with 14.68% micropartuclated whey protein added Figure 11, e) shows code 3 with 18.18% micropartuclated whey protein added Figure 11, f) shows the reference with 0% micropartuclated whey protein added

From figure 11, a) to f), it is shown that the reference pasta, with no microparticulated and denatured whey protein added, looks dense and compact. On the contrary, the more microparticulated and denatured whey protein added to the pasta, the less dense and compact as the pasta.

9.2 Dry matter analysis

The dry matter content was measured for the samples of code 1-5 (shown in example 9.1) and the reference. The result is shown in Figure 12.

The dry matter content was measured by evaporating all water from the samples by drying a known amount of sample pasta at a constant temperature of $102 \pm 2°C$ in a drying oven until constant weight.

As shown in figure 12, the total dry matter content in the reference pasta was highest, and the total dry matter content decreases when the amount of microparticulated and denatured whey protein composition is increased. This is even though the water content increases when the amount of microparticulated and denatured whey protein composition is increased (see table above).

9.3 - water activity

The water activity was measured for the samples of code 1-5 (shown in example 9.1) and the reference. The result is shown in Figure 13.

From figure 13, it is shown that the water activity for all samples (reference and codes 1-5) is almost the same.

Thus, the dry matter content can be decreased when the amount of microparticulated and denatured whey protein composition is increased without affecting the water activity. Water activity is an expression of the amount of free water in a sample, ranging between 0 (dryness) to 1 (Condensing humidity). Free water is available for microorganisms, enzymes and chemicals, thus being important for durability of the sample. All the measured samples have similar high $a_w$ value. Thus, even though total water content is higher when added microparticulated and denatured whey protein composition is also increased, the water is not "free", but bound within the pasta matrix. This means that the more microparticulated and denatured whey protein present in the pasta, the more water can be bound in the pasta.

9.4 - Measuring stickiness

The 6 samples (reference and codes 1-5 from example 9.1) was also measured for stickiness by a Texture Analyzer. The stickiness was measured on Texture Analyzer TA XTPlus with 1 mm flat Perspex knife blade (A/LKB-F), 5 kg load cell, and at ambient temperature. Data was analyzed using Turkey pairwise comparison (Minitab17).

100 g of pasta dough was made and stored cool for 24 hours. Then, the bands was cooked in 1.5 L distilled water with 6.5 g salt. After 8 minutes, the cooked pasta was taken from the water, shaken free of water, and after 30 minutes the cooked pasta bands was measured for stickiness in the Texture Analyzer. A texture analysis was repeated 8 times for each code and the experiment was conducted twice. The data was analyzed using a Tukey pairwise comparison by use of Minitab17.

In figure 14 is the result of the stickiness of codes 1-5 and the reference shown, and it is shown that significant differences were measured between the samples. For example, the reference had the highest stickiness and the stickiness decreased as the amount of micropariculated and denatured whey protein was increased. It can be seen from figure 14 that the reference, code 1 and code 2 has a significant higher stickiness value than code 3, code 4 and code 5.

9.5 - Sensory evaluation

Sensory analysis was also measured on the codes 1-5 and the reference. The sensory test was conducted by use of a Consensus Napping method, i.e. blind-measured by a test panel of 7 persons, where the samples were individually scored and afterwards evaluated to a consensus placement on a scale. 7 parameter was evaluated (surface of the pasta, appetizing, stickiness, elasticity, firmness, chewiness and off-flavor) and a score between 1-10 was given, where "10" is the best or most and "1" is the lowest score.

The sensorial analysis was evaluated as described in table 8 below:

Table 8:

| Attribute | Score 1 | Score 10 | Description | Measured by |
|---|---|---|---|---|
| Surface | Rugged | Smooth | Defines the surface nad edges of the pasta. | Visual |
| Appetizing | Little | Very much | Define how the pasta looks in the tray. Is the pasta appealing or not | Visual |
| Stickyness | Non sticky | Sticky | Grab the pasta with thumb and index finger. Define how the pasta sticks to itself | Fingers |
| Elasticity | Fragile | Elastic | Grab a pasta string and pull lightly apart. Define the elasticity | Fingers |
| Firmness | Brittle | Very firm | Place a pasta string between the front teeth's. Define firmness in the first bite | Mouth |
| Off-flavour | Yes | No | Is any kind of off-flavour in the product detected | Mouth |

The off-flavour was not detected by a 1-10 scale but with an "yes" or "no".

The result of the test is shown in table 9 below.

Table 9:

| | Code 1 | Code 2 | Code 3 | Code 4 | Code 5 | Reference |
|---|---|---|---|---|---|---|
| Surface | 4 | 5 | 7 | 9 | 10 | 1 |
| Appetizing | 3 | 4 | 8 | 9 | 10 | 1 |
| Stickiness | 8 | 5 | 2 | 4 | 1 | 10 |
| Elasticity | 9 | 8 | 5 | 3 | 2 | 10 |
| Firmness | 4 | 4 | 5 | 5 | 6 | 5 |
| Chewiness | 5 | 6 | 5 | 7 | 7 | 9 |
| Off-flavour | No off-flavour detected | No off-flavour detected | No off-flavour detected | Milky smell | Milky smell | Smell of wet flour |

The high protein content does not provide a negative impact on the taste or appeareance of the pasta.

Example 10: Analysis of the effect of caseinate in pasta

A pasta made with the microparticulated and denatured whey protein according to the invention was compared to pasta comprising caseinate. Two different pasta doughs was prepared comprising the following ingredients:

| Ingredients, total product (%) | Pasta with caseinate | Pasta with whey protein of the invention |
|---|---|---|
| Water, tap | 30.65 | 34.39 |
| Wheat flour, Durum Semolina | 33.45 | 31.65 |
| Wheat flour, Reform flour | 16.29 | 15.41 |
| Egg white powder | 3.61 | 3.42 |
| Salt, NaCl | 0.48 | 0.45 |
| Whey protein, microparticulated and denatured | 0.00 | 14.68 |
| Nutrilac BK-9020* | 15.52 | 0.00 |
| * Nutrilac BK-9020 comprises about 60% caseinate | | |

The pasta dough is made by mixing the ingredients of the dough.

Pictures of the two different pasta doughs are taken and is shown in figure 15.

Figure 15 A) shows pasta dough with microparticulated and denatured whey protein of the invention.

Figure 15 B) shows a pasta dough with caseinate

Figure 15 C) shows cooked pasta with microparticulated and denatured whey protein of the invention.

Figure 15 D) shows a cooked pasta with caseinate

From figure 15 A) and B), it can be seen that the uncooked pasta dough with caseinate is rugged, while the uncooked pasta with the microparticulated and denatured whey protein is smooth in the surface. In addition, it was observed during rolling of the pasta plates that the pasta with caseinate was not good, since it split in layers during rolling and was sticking together. On the contrary, the dough with microparticulated and denatured whey protein was easy to roll out and were not sticky. In addition, the dough had a nice light color.

From figure 15 C) and D), it can be seen that the cooked pasta with caseinate is rugged in the surface, had an uneven surface and swelled (absorbed a lot of water because of the caseinate) as compared to the cooked pasta with the microparticulated and denatured whey protein which had a good smooth surface, structure and not a high absorption of water.

## Claims

1. A pasta comprising an amount of total protein of at least 13% by weight of dry matter content and wherein said pasta comprises microparticulated and denaturated whey protein in an amount of at least 5% by weight of the dry matter content of the pasta.

2. The pasta according to claim 1, wherein the pasta comprises microparticulated and denatured whey protein in an amount of at least 35% by weight of the total protein content in the pasta.

3. The pasta according to any of the claims 1 to 2, wherein the microparticulated and denatured whey protein has a particle size in the range of 0.5 to 10 micron.

4. The pasta according to claim 3, wherein at least 50% by weight of the the microparticulated and denatured whey protein has a particle size in the range of 0.5 to 10 micron.

5. The pasta according to any of claims 1 to 4, wherein the pasta comprises essentially no casein or caseinate.

6. The pasta according to any of claims 1 to 5, wherein the total content of protein in the pasta is at least 15% by weight of the dry matter content of the pasta .

7. The pasta according to claim 6, wherein the total content of protein in the pasta is in the range of 18-27% by weight of the dry matter content.

8. The pasta according to any of the claims 1 to 7, wherein at least 50% of the whey protein in the pasta is microparticulated and denatured.

9. The pasta according to any of the claims 1 to 8, wherein the pasta is fresh pasta.

10. The pasta according to claim 9, wherein the moisture content in the fresh pasta is at least 15% by weight.

11. The pasta according to any of the claims 1 to 10, wherein the pasta comprises no emulsifier.

12. The pasta according to any of the claims 1 to 11, wherein the microparticulated and denatured whey protein is derived from microparticulated and denatured whey protein derived from sweet whey.

## Patentansprüche

1. Pasta, umfassend eine Menge an Gesamtprotein von zumindest 13 Gew.-% der Trockenmasse, wobei die Pasta mikropartikuliertes und denaturiertes Molkenprotein in einer Menge von zumindest 5 Gew.-% der Trockenmasse der Pasta umfasst.

2. Pasta nach Anspruch 1, wobei die Pasta mikropartikuliertes und denaturiertes Molkenprotein in eine Menge von zumindest 35 Gew.-% des Gesamtproteingehalts in der Pasta umfasst.

3. Pasta nach einem der Ansprüche 1 bis 2, wobei das mikropartikulierte und denaturierte Molkenprotein eine Partikelgröße in dem Bereich von 0,5 bis 10 Mikrometern aufweist.

4. Pasta nach Anspruch 3, wobei zumindest 50 Gew.-% des mikropartikulierten und denaturierten Molkenproteins eine Partikelgröße in dem Bereich von 0,5 bis 10 Mikrometern aufweisen.

5. Pasta nach einem der Ansprüche 1 bis 4, wobei die Pasta im Wesentlichen kein Casein oder Caseinat umfasst.

6. Pasta nach einem der Ansprüche 1 bis 5, wobei der Gesamtgehalt an Protein in der Pasta zumindest 15 Gew.-% des Trockenmassegehalts der Pasta beträgt.

7. Pasta nach Anspruch 6, wobei der Gesamtgehalt an Protein in der Pasta in dem Bereich von 18-27 Gew.-% des Trockenmassegehalts liegt.

8. Pasta nach einem der Ansprüche 1 bis 7, wobei zumindest 50 % des Molkenproteins in der Pasta mikropartikuliert und denaturiert sind.

9. Pasta nach einem der Ansprüche 1 bis 8, wobei die Pasta frische Pasta ist.

10. Pasta nach Anspruch 9, wobei der Feuchtegehalt in der frischen Pasta zumindest 15 Gew.-% beträgt.

11. Pasta nach einem der Ansprüche 1 bis 10, wobei die Pasta keinen Emulgator umfasst.

12. Pasta nach einem der Ansprüche 1 bis 11, wobei das mikropartikulierte und denaturierte Molkenprotein aus mikropartikuliertem und denaturiertem Molkenprotein gewonnen wird, das aus Süßmolke gewonnen wird.

**Revendications**

1. Pâtes comprenant une quantité de protéines totales supérieure ou égale à 13 % en poids de la teneur en matière sèche et lesdites pâtes comprenant une protéine de lactosérum microparticulaire et dénaturée en une quantité supérieure ou égale à 5 % en poids de la teneur en matière sèche des pâtes.

2. Pâtes selon la revendication 1, lesdites pâtes comprenant une protéine de lactosérum microparticulaire et dénaturée en une quantité supérieure ou égale à 35 % en poids de la teneur totale en protéines des pâtes.

3. Pâtes selon l'une quelconque des revendications 1 à 2, ladite protéine de lactosérum microparticulaire et dénaturée possédant une taille de particule comprise dans la plage allant de 0,5 à 10 microns.

4. Pâtes selon la revendication 3, au moins 50 % en poids de la protéine de lactosérum microparticulaire et dénaturée possédant une taille de particule comprise dans la plage allant de 0,5 et 10 microns.

5. Pâtes selon l'une quelconque des revendications 1 à 4, lesdites pâtes ne comprenant pratiquement pas de caséine ou de caséinate.

6. Pâtes selon l'une quelconque des revendications 1 à 5, ladite teneur totale en protéines des pâtes étant supérieure ou égale à 15 % en poids de la teneur en matière sèche des pâtes.

7. Pâtes selon la revendication 6, ladite teneur totale en protéines des pâtes étant comprise dans la plage allant de 18 à 27 % en poids de la teneur en matière sèche.

8. Pâtes selon l'une quelconque des revendications 1 à 7, au moins 50 % de la protéine de lactosérum dans les pâtes étant microparticulaire et dénaturée.

9. Pâtes selon l'une quelconque des revendications 1 à 8, lesdites pâtes étant des pâtes fraîches.

**10.** Pâtes selon la revendication 9, ladite teneur en humidité des pâtes fraîches étant supérieure ou égale à 15 % en poids.

**11.** Pâtes selon l'une quelconque des revendications 1 à 10, lesdites pâtes ne comprenant pas d'émulsifiant.

**12.** Pâtes selon l'une quelconque des revendications 1 à 11, ladite protéine de lactosérum microparticulaire et dénaturée étant dérivée de la protéine de lactosérum microparticulaire et dénaturée dérivée du lactosérum doux.

a)

b)

c)

d)

e)

f)

g)

Fig. 1

a)

b)

c)

Fig. 2

Fig.3

a)

b)

Fig. 4

Fig. 5

Fig. 6

Fig. 7

a)

b)

b)

d)

e)

Fig. 8

A)

B)

Fig. 9

## Pasta ribbon cooked 2 min

A)

## Pasta ribbon cooked 8 min

B)

Fig. 10

C)

Fig. 10

a)                                          b)

c)                                          d)

e)                                          f)

Fig. 11

**Dry matter**

Reference: 78,57
Code 1: 74,31
Code 2: 75,51
Code 3: 71,49
Code 4: 68,75
Code 5: 69,91

Fig. 12

Fig. 13

Fig. 14

A)

B)

C)

D)

Figure 15

**EP 3 720 296 B1**

REFERENCES CITED IN THE DESCRIPTION

**Patent documents cited in the description**

- US 4361591 A
- US 2005208180 A
- EP 0250623 A